# EUROPEAN PATENT APPLICATION

(11) **EP 3 330 061 A1**
(43) Date of publication of application: **06.06.2018**
(21) Application number: 17204744.1
(22) Date of filing: 30.11.2017
(51) Int. Cl.: B29C 65/52, B29C 65/78, A41H 43/04, D06H 5/00, A41D 27/24

(54) **BONDING DEVICE AND CONVEYANCE CONTROL UNIT**

(30) Priority: 30.11.2016 JP 2016233374
(71) Applicant: BROTHER KOGYO KABUSHIKI KAISHA, Nagoya-shi, Aichi-ken 467-8561 (JP)
(72) Inventor: SHIBATA, Itaru, Aichi-ken 467-8562 (JP); UMEDA, Kazutoshi, Aichi-ken 467-8562 (JP); MINAGAWA, Yuichiro, Aichi-ken 467-8562 (JP); IWAKOSHI, Hiroyasu, Aichi-ken 467-8562 (JP); MURAKAMI, Kenji, Aichi-ken 467-8562 (JP); KOKURYU, Takahiro, Aichi-ken 467-8562 (JP)
(74) Representative: J A Kemp

(57) **Abstract**

A bonding device (1) includes a conveyance mechanism (14), a nozzle (11) and a first detection portion (141), and a movement mechanism (55). The conveyance mechanism conveys a first sheet (C1) and a second sheet (C2). The nozzle includes a discharge port (11D) and discharges an adhesive onto the lower cloth. The first detection portion detects whether the first sheet is at a predetermined detection position. The movement mechanism moves the first sheet in the specified direction orthogonal to the conveyance direction. When the first detection portion detects that the first sheet is at the predetermined detection position, the movement mechanism moves the first sheet to one side in the specified direction. When the first detection portion detects that the first sheet is not at the predetermined detection position, the movement mechanism moves the first sheet to another side in the specified direction.

## Description

### BACKGROUND

The present invention relates to a bonding device and a conveyance control unit.

A cloth bonding device disclosed in Japanese Laid-Open Patent Publication No. 2011-122262 is a bonding device that bonds two sheets together via an adhesive. The cloth bonding device is provided with a nozzle, an upper transport roller, a belt and a guide member for a two-edge portion. The nozzle discharges the adhesive onto a lower cloth. The upper transport roller transports the lower cloth to which the adhesive has been applied and an upper cloth while pressing the lower cloth and the upper cloth between itself and the belt. The guide member for the two-edge portion is provided with a lower cloth guide portion and an upper cloth guide portion. The lower cloth guide portion determines a position of one end portion of the lower cloth (hereinafter referred to as a lower cloth specified end portion) in a direction orthogonal to a conveyance direction. The upper cloth guide portion determines a position of one end portion of the upper cloth (hereinafter referred to as an upper cloth specified end portion) in the direction orthogonal to the conveyance direction. When the upper cloth specified end portion and the lower cloth specified end portion are bonded together by the cloth bonding device, an operator inserts the lower cloth into the lower cloth guide portion and inserts the upper cloth into the upper cloth guide portion. For example, when the lower cloth specified end portion curves, displacement of the position of the lower cloth specified end portion with respect to the nozzle tends to occur at the time of conveyance in the conveyance direction. If the nozzle discharges the adhesive onto the lower cloth specified end portion whose position is displaced, there is a possibility that a section to which the adhesive is unable to be applied may be generated in the lower cloth specified end portion, or a possibility that the adhesive may spill over from the lower cloth specified end portion. Therefore, there are cases in which an application accuracy to the lower cloth specified end portion is not stable.

### SUMMARY

It is an object of the present invention to provide a bonding device and a conveyance control unit that are capable of stabilizing an application accuracy of an adhesive onto a sheet end portion.

A bonding device of the present invention includes a conveyance mechanism, a nozzle, a supply mechanism, and a discharge-conveyance control portion. The conveyance mechanism is adapted to convey a first sheet and a second sheet along a conveyance direction intersecting an up-down direction while pressure-bonding, via an adhesive, the first sheet and the second sheet that are overlaid in the up-down direction. The nozzle includes a discharge port adapted to discharge the adhesive onto the first sheet and is disposed on an upstream side of the conveyance mechanism in the conveyance direction and between the first sheet and the second sheet in the up-down direction. The supply mechanism is adapted to supply the adhesive to the nozzle. The discharge-conveyance control portion is adapted to control the conveyance mechanism and the supply mechanism so as to pressure-bond and convey the first sheet and the second sheet while applying the adhesive onto a specified end portion of the first sheet on one side in a specified direction orthogonal to the conveyance direction and the up-down direction. The bonding device of the present invention further includes a first detection portion, a movement mechanism, and a movement control portion. The first detection portion is adapted to detect whether the first sheet is at a predetermined detection position located on the upstream side of the discharge port in the conveyance direction. The movement mechanism is adapted to move the first sheet in the specified direction on the upstream side of the detection position in the conveyance direction. The movement control portion is adapted to control the movement mechanism when the discharge-conveyance control portion controls the conveyance mechanism and the supply mechanism. The movement control portion includes a first movement control portion and a second movement control portion. The first movement control portion controls the movement mechanism and moves the first sheet to the one side in the specified direction when the first detection portion detects that the first sheet is not at the detection position. The second movement control portion controls the movement mechanism and moves the first sheet to another side in the specified direction when the first detection portion detects that the first sheet is at the detection position. When the first sheet is at the detection position, the specified end portion moves in the direction in which the first sheet located at the detection position deviates from the detection position. When the first sheet is not at the detection position, the specified end portion moves in the direction in which the first sheet located at a position deviated from the detection position moves toward the detection position. The bonding device can control the position of the specified end portion in the specified direction, by moving the first sheet in the direction of deviating from the detection position or in the direction of moving toward the detection position. The bonding device applies the adhesive onto the specified end portion of the first sheet, by discharging the adhesive from the discharge port onto the specified end portion of the first sheet whose position is controlled. Thus, the bonding device can stabilize an application accuracy of the adhesive onto the specified end portion of the first sheet.

In the bonding device, the movement mechanism may include a first roller, a first drive portion, and a second roller. The first roller may be adapted to rotate reciprocally around a first axis line extending in parallel to the conveyance direction in a first rotation direction and a second rotation direction. The first rotation direction may be a direction to move the first sheet to the one side in the specified direction. The second rotation direction may be the direction to move the first sheet to the other side in the specified direction. The first drive portion may be coupled to the first roller. The second roller may be adapted to face the first roller from above and rotate around a second axis line parallel to the specified direction. The second roller may be adapted to come into contact with the first sheet in a state in which the first sheet is arranged between the second roller and the first roller. The first movement may control portion control the first drive portion and rotate the first roller in the first rotation direction when the first detection portion detects that the first sheet is not at the detection position. The second movement control portion may control the first drive portion and rotate the first roller in the second rotation direction when the first detection portion detects that the first sheet is at the detection position. In the bonding device, the first sheet is arranged between the first roller and the second roller. Since the second roller comes into contact with the upper surface of the first sheet, the first sheet does not float up and can follow the rotation of the first roller. The bonding device can move the first sheet to the one side in the specified direction, by rotating the first roller in the first rotation direction. The bonding device can move the first sheet to the other side in the specified direction, by rotating the first roller in the second rotation direction. The bonding device can control the position of the specified end portion in the specified direction, simply by rotating the first roller in one place. Therefore, it is not necessary to secure a large space to provide the movement mechanism in the bonding device, and it is possible to suppress an increase in the size of the movement mechanism.

In the bonding device, the first roller may include an outer peripheral surface provided with a groove extending in parallel to the conveyance direction. Since the groove extends in parallel to the first axis line, when the first roller rotates, friction caused by the groove is likely to occur between the first roller and the first sheet. Therefore, the bonding device can reliably move the first sheet in the specified direction. Since the groove extends in parallel to the conveyance direction, when the conveyance mechanism conveys the first sheet, the friction caused by the groove is unlikely to occur between the first roller and the first sheet. Therefore, the bonding device can inhibit the first roller from obstructing the conveyance of the first sheet by the conveyance mechanism. Thus, the bonding device can reliably convey the first sheet while reliably controlling the position of the specified end portion in the specified direction.

In the bonding device, an outer peripheral surface of the second roller may include a facing portion that is recessed inwardly in a radial direction along an outer shape of the first roller in the specified direction. Since the second roller is provided with the facing portion, it is possible to enlarge the area over which the first sheet is in contact with the first roller and the second roller in a state in which the first sheet is arranged between the second roller and the first roller. Therefore, in the bonding device, the first sheet does not float up and can follow the rotation of the first roller.

In the bonding device, the movement mechanism may include a support shaft portion, a support arm, and a swing shaft portion. The support shaft portion may be adapted to support the second roller such that the second roller is capable of rotating around the second axis line. The support arm may extend in parallel to the conveyance direction and adapted to support the support shaft portion. The swing shaft portion may extend in parallel to the support shaft portion, may be provided on one of the upstream side and a downstream side with respect to the support shaft portion in the conveyance direction, and may be adapted to swingably support the support arm. When the swing shaft portion swings the support arm, the second roller is displaced in the up-down direction. More specifically, the second roller can move in the direction in which the facing portion approaches or separates from the first roller. When the first sheet is arranged between the second roller and the first roller, the second roller can be displaced in accordance with the thickness of the first sheet. Therefore, regardless of the thickness of the first sheet, the bonding device can reliably control the position of the specified end portion in the specified direction.

The bonding device may further include a first support portion, a second support portion, a nozzle support mechanism, and a holding portion. The first support portion may be located on the upstream side of the conveyance mechanism in the conveyance direction and on an adhesive discharge direction side in relation to the nozzle, and may be adapted to support the first sheet from below. The second support portion may be located on the upstream side of the conveyance mechanism in the conveyance direction and on an opposite direction side from the discharge direction in relation to the nozzle, and may be adapted to support the second sheet from below. The nozzle support mechanism may be adapted to support the nozzle on the upstream side of the conveyance mechanism in the conveyance direction such that the nozzle is movable in one of a direction approaching and a direction separating from the conveyance mechanism. The holding portion may be adapted to hold the first detection portion and the second roller. The second support portion and the holding portion may be movable between a first position and a second position. The first position may be a position in which the second support portion and the second roller are aligned with the nozzle on the upstream side in the conveyance direction. The second position may be a position in which the second support portion and the second roller are displaced to the one side in the specified direction from the position in which the second support portion and the second roller are aligned with the nozzle on the upstream side in the conveyance direction. The nozzle support mechanism may be adapted to move the nozzle when the second support portion and the holding portion are located in the second position. When the second support portion and the holding portion move to the second position, the nozzle support mechanism can move the nozzle in the direction of separating from the conveyance mechanism. When the nozzle is in a position separated from the conveyance mechanism, an operator performs cleaning of the nozzle, for example. The operator can easily clean the nozzle, by the bonding device moving the nozzle in the direction of separating from the conveyance mechanism, from the position in which members of the conveyance mechanism and the like are disposed.

In the bonding device, the first support portion may be positioned below the second support portion. The holding portion may include an engagement portion capable of engaging with the second support portion with respect to the other side in the specified direction. The second support portion may be movable in the specified direction with respect to the holding portion. The engagement portion may engage with the second support portion and move the second support portion to the second position when the holding portion moves from the first position to the second position. The engagement portion may release the engagement with the second support portion and the second support portion is maintained in the second position when the holding portion moves from the second position to the first position. When the bonding device moves the nozzle, it is necessary to move the holding portion and the second support portion to the second position. When the holding portion moves from the first position to the second position, the engagement portion engages with the second support portion. Thus, the second support portion moves from the first position to the second position. Therefore, the bonding device can also move the second support portion to the second position, simply by moving the holding portion to the second position. It is therefore possible to improve working efficiency. When the operator arranges the first sheet on the first support portion between the first roller and the second roller, if the second support portion is in the first position, it is difficult to arrange the first sheet. When the holding portion moves from the second position to the first position, the second support portion is maintained in the second position. Therefore, since the second support portion does not obstruct a space between the first roller and the second roller, the operator can easily arrange the first sheet between the first roller and the second roller.

The bonding device may further include a first support portion, a second support portion, a nozzle support mechanism, a holding portion, a second drive portion, a third drive portion, and a drive control portion. The first support portion may be located on the upstream side of the conveyance mechanism in the conveyance direction and on an adhesive discharge direction side in relation to the nozzle, and adapted to support the first sheet from below. The second support portion may be located on the upstream side of the conveyance mechanism in the conveyance direction and on an opposite direction side from the discharge direction in relation to the nozzle, and adapted to support the second sheet from below. The nozzle support mechanism may be adapted to support the nozzle on the upstream side of the conveyance mechanism in the conveyance direction such that the nozzle is movable in one of a direction approaching and a direction separating from the conveyance mechanism. The holding portion may be adapted to hold the first detection portion and the second roller. The second drive portion may be adapted to move the holding portion to a first position and a second position. The first position may be a position in which the second support portion and the second roller are aligned with the nozzle on the upstream side in the conveyance direction. The second position may be a position in which the second support portion and the second roller are displaced to the one side in the specified direction from the position in which the second support portion and the second roller are aligned with the nozzle on the upstream side in the conveyance direction. The third drive portion may be adapted to move the second roller to a third position and a fourth position. The third position may be a position in which the second roller faces the first roller from above in accordance with swinging of the support arm. The fourth position may be a position in which the second roller is further separated from the first roller than in the third position. The drive control portion may be configured to control the third drive portion and the second drive portion. The first support portion may be positioned below the second support portion. The second support portion and the holding portion may be movable between the first position and the second position. The nozzle support mechanism may be capable of moving the nozzle when the second support portion and the holding portion are located in the second position. The holding portion may include an engagement portion capable of engaging with the second support portion from the other side in the specified direction. The second support portion may be movable in the specified direction with respect to the holding portion, The engagement portion may engage with the second support portion and move the second support portion to the second position when the holding portion moves from the first position to the second position. The engagement portion may release the engagement with the second support portion and the second support portion may be maintained in the second position when the holding portion moves from the second position to the first position. The second roller may be adapted to displace between the third position and the fourth position. When a drive command to the second drive portion is received, after controlling the third drive portion and moving the second roller to the fourth position, the drive control portion may control the second drive portion and move the holding portion to one of the first position and the second position. When the drive command to the second drive portion is received, the bonding device moves the second roller to the fourth position before moving the holding portion to the first position or the second position. Thus, the bonding device can inhibit the second roller from coming into contact with the first roller. When the holding portion moves from the first position to the second position, the engagement portion engages with the second support portion. As a result, the second support portion moves from the first position to the second position. Thus, the bonding device moves the holding portion and the second support portion to the second position, simply by receiving the drive command to the second drive portion. It is therefore possible to improve the working efficiency. When the drive command to the second drive portion is received, the bonding device moves the holding portion from the second position to the first position. When the holding portion moves from the second position to the first position, the second support portion is maintained in the second position. Therefore, since the second support portion does not obstruct the space between the first roller and the second roller, the operator can easily arrange the first sheet between the first roller and the second roller.

The bonding device may further include a nozzle drive portion, a second detection portion, and a movement prohibition portion. The nozzle drive portion may be adapted to drive the nozzle support mechanism and to move the nozzle in one of the direction approaching and the direction separating from the conveyance mechanism. The second detection portion may be adapted to detect a position of the holding portion in the specified direction. The movement prohibition portion may be adapted to prohibit the movement of the nozzle by the nozzle drive portion when the drive command to the nozzle drive portion is received and the position of the holding portion detected by the second detection portion is the first position. By driving of the nozzle drive portion, the bonding device moves the nozzle support mechanism in the direction of approaching or separating from the conveyance mechanism. When the drive command to the nozzle drive portion is received, the bonding device prohibits the movement of the nozzle when the holding portion is in the first position. Thus, the bonding device can inhibit the nozzle from interfering with the holding portion.

In the bonding device, the discharge port may be located on the upstream side in the conveyance direction in relation to a central portion of the nozzle in the conveyance direction. Therefore, in comparison to when the discharge port is located on the downstream side in the conveyance direction in relation to the central portion of the nozzle in the conveyance direction, the distance between the discharge port and the detection position is short. For example, when the specified end portion curves, the bonding device can improve the application accuracy of the adhesive onto the specified end portion, by controlling the position of the specified end portion in the specified direction immediately in front of the discharge port.

The bonding device may further include a second support portion. The second support portion may be located on the upstream side of the conveyance mechanism in the conveyance direction and on an opposite direction side from the discharge direction in relation to the nozzle, and adapted to support the second sheet from below. The second support portion may be disposed on the upper side of the nozzle, and has a shape extending in a direction inclined downward from the upstream side toward the downstream side in the conveyance direction. The nozzle may include a first surface, a second surface, and an inclined surface. The first surface may include the discharge port and extend in the conveyance direction and the specified direction. The second surface may extend upward from an upstream side end portion of the first surface in the conveyance direction. The inclined surface may be provided on the opposite direction side from the first surface and on the downstream side of the second surface in the conveyance direction, and may be inclined downward from the upstream side toward the downstream side in the conveyance direction. The greater the volume of the nozzle, the larger the heat capacity, and thus the temperature of the adhesive can easily be maintained to be constant. The nozzle can secure the heat capacity corresponding to an amount by which the second surface extends upward from the upstream side end portion of the first surface in the conveyance direction. The second support portion is provided on the upper side of the nozzle, and is inclined downward from the upstream side toward the downstream side in the conveyance direction. Since the inclined surface is inclined downward from the upstream side toward the downstream side in the conveyance direction, the nozzle can secure a space to dispose the second support portion. Therefore, since the nozzle includes the first surface, the second surface and the inclined surface, the bonding device can secure the space to dispose the second support portion while securing the heat capacity of the nozzle.

A conveyance control unit of a first sheet adapted to be mounted on a bonding device in the present invention includes a conveyance mechanism, and a nozzle. The conveyance mechanism is adapted to convey the first sheet and a second sheet along a conveyance direction intersecting an up-down direction while pressure-bonding, via an adhesive, the first sheet and the second sheet that are overlaid in the up-down direction. The nozzle includes a discharge port adapted to discharge the adhesive onto the first sheet and is disposed on an upstream side of the conveyance mechanism in the conveyance direction and between the first sheet and the second sheet in the up-down direction. And the conveyance control unit of the present invention pressure-bonds and conveys the first sheet and the second sheet while applying the adhesive onto a specified end portion of the first sheet on one side in a specified direction orthogonal to the conveyance direction and the up-down direction. The conveyance control unit further includes a first support portion, a second support portion, a first detection portion, and a movement mechanism. The first support portion is located on the upstream side of the discharge port in the conveyance direction and on a discharge direction side, in which the discharge port discharges the adhesive, in relation to the nozzle, and adapted to support the first sheet from below. The second support portion is located on the upstream side of the discharge port in the conveyance direction and on an opposite direction side from the discharge direction in relation to the nozzle, and adapted to support the second sheet from below. The first detection portion is adapted to detect whether the first sheet is at a predetermined detection position located on the upstream side of the discharge port in the conveyance direction. The movement mechanism is adapted to move the first sheet in the specified direction on the upstream side of the detection position in the conveyance direction. The movement mechanism moves the first sheet to one side in the specified direction when the first detection portion detects that the first sheet is not at the detection position and moves the first sheet to another side in the specified direction when the first detection portion detects that the first sheet is at the detection position. The bonding device on which the conveyance control unit is mounted obtains the same effects as those of the bonding device of the first aspect.

### BRIEF DESCRIPTION OF THE DRAWINGS

Embodiments will be described below in detail with reference to the accompanying drawings in which:
FIG. 1 is a perspective view of a bonding device 1;
FIG. 2 is a perspective view showing an internal configuration of the bonding device 1;
FIG. 3 is a left side view of the bonding device 1;
FIG. 4 is a perspective view of a nozzle 11;
FIG. 5 is a bottom view of the nozzle 11;
FIG. 6 is a plan view of a conveyance control unit 50 (excluding a second support portion 53);
FIG. 7 is a left side view of the conveyance control unit 50 (excluding a cover 501) when a second roller 57 is in a third position;
FIG. 8 is a perspective view of a holding portion 54 (in a first position) and the second support portion 53 (in the first position);
FIG. 9 is a perspective view of the holding portion 54 (in the first position) and the second support portion 53 (in a second position);
FIG. 10 is a rear view of the conveyance control unit 50;
FIG. 11 is a left side view of the conveyance control unit 50 (excluding the cover 501) when the second roller 57 is in a fourth position;
FIG. 12 is a perspective view of the holding portion 54 (in the second position) and the second support portion 53 (in the second position);
FIG. 13 is a block diagram showing an electrical configuration of the bonding device 1;
FIG. 14 is a flowchart of first processing;
FIG. 15 is a flowchart of bonding processing;
FIG. 16 is a flowchart of second processing; and
FIG. 17 is a rear view of the conveyance control unit 50 provided with a first sensor 241.

### DETAILED DESCRIPTION

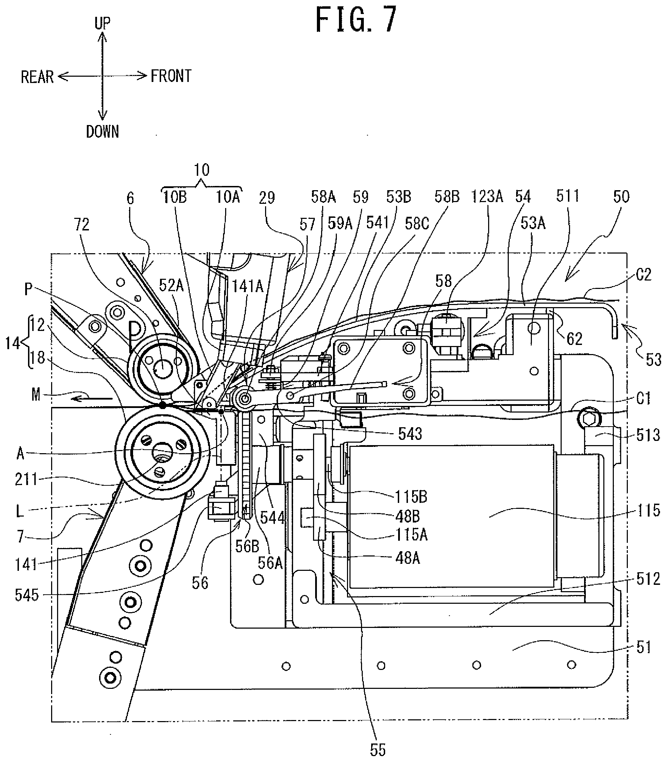

An embodiment of the present invention will be explained. In the following explanation, left and right directions, front and rear directions, and up and down directions as indicated by arrows in the drawings are used. A bonding device 1 performs a bonding operation that bonds two sheets of objects to be bonded using an adhesive. The objects to be bonded are flexible sheet-like objects, and the objects to be bonded are, for example, a lower cloth C1 and an upper cloth C2 (refer to FIG. 7).

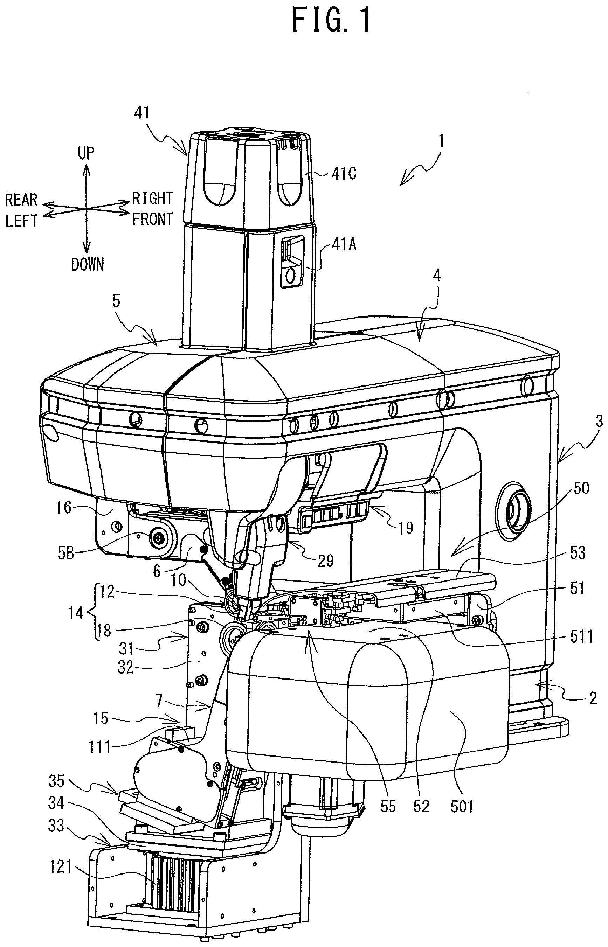

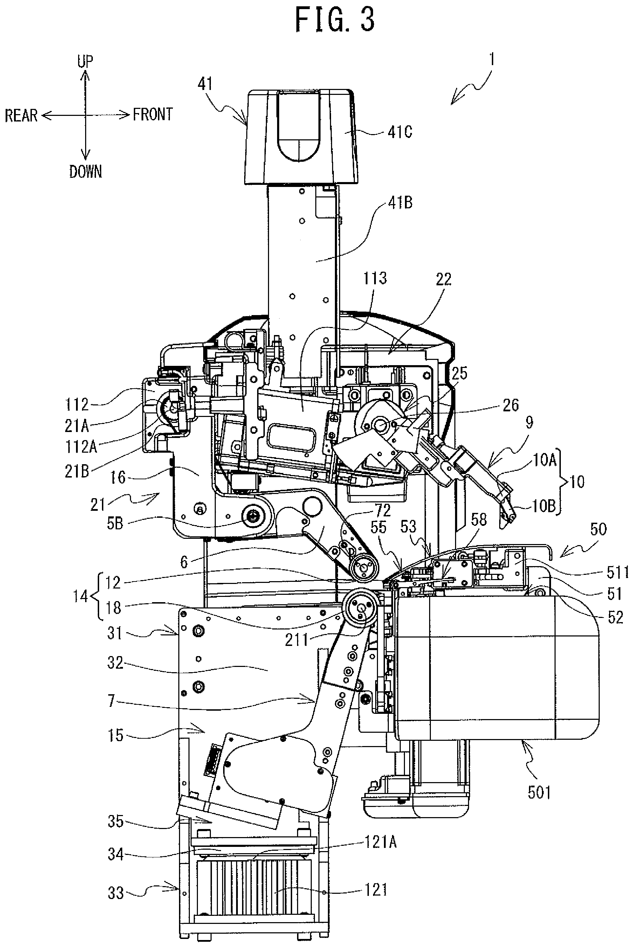

A mechanical configuration of the bonding device 1 will be explained with reference to FIG. 1 to FIG. 12. As shown in FIG. 1, the bonding device 1 is provided with a seat portion 2, a pillar 3, an arm portion 4 and a head portion 5. The seat portion 2 has a cuboid shape, and is fixed to a work bench. The pillar 3 has a columnar shape, and extends upward from the upper surface of the seat portion 2. The arm portion 4 extends to the left from the upper end portion of the pillar 3. The head portion 5 protrudes to the left from the left end portion of the arm portion 4. The seat portion 2 supports an attachment member 31. The attachment member 31 is provided with a fixing portion 32 and a holding portion 33. The fixing portion 32 has a rectangular plate shape, in a left side view, that extends to the lower side of the seat portion 2, and is fixed to the left surface of the seat portion 2. A front end upper portion of the fixing portion 32 extends to the front side of the seat portion 2. The holding portion 33 extends to the left from a lower portion of the fixing portion 32, and has a box shape that is open upward and leftward. The holding portion 33 holds a lower air cylinder 121. A movable portion 121A (refer to FIG. 3) is provided on the upper side of the lower air cylinder 121. The movable portion 121A moves in the up-down direction in accordance with driving of the lower air cylinder 121. A fixing portion 34 is fixed to the upper end portion of the movable portion 121A. The fixing portion 34 has a rectangular plate shape, and extends substantially parallel to the horizontal plane. A holding portion 35 is fixed to the upper side of the fixing portion 34. The holding portion 35 has a triangular shape in a left side view. The rear side of the upper surface of the holding portion 35 is inclined upward. The holding portion 35 holds a lower feed arm 7 and a lower roller drive mechanism 15 on the upper side of the holding portion 35. The lower feed arm 7 has a box shape that extends in the up-down direction, and the upper side of the lower feed arm 7 has an arm shape that is inclined forward. The lower feed arm 7 supports a lower rotating shaft 211 at the leading end portion of the lower feed arm 7. The lower rotating shaft 211 extends in the left-right direction, and protrudes to the left from the lower feed arm 7. The left end portion of the lower rotating shaft 211 supports a lower roller 18.

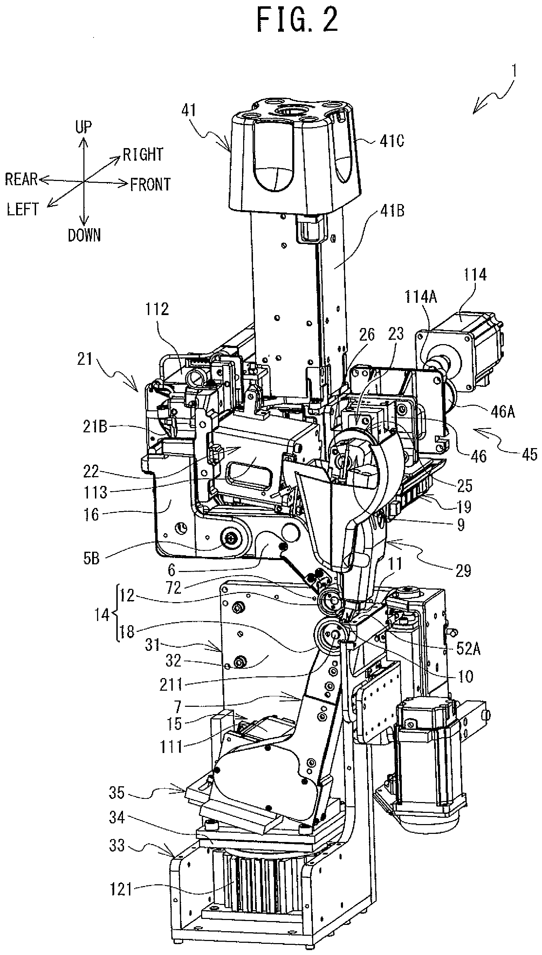

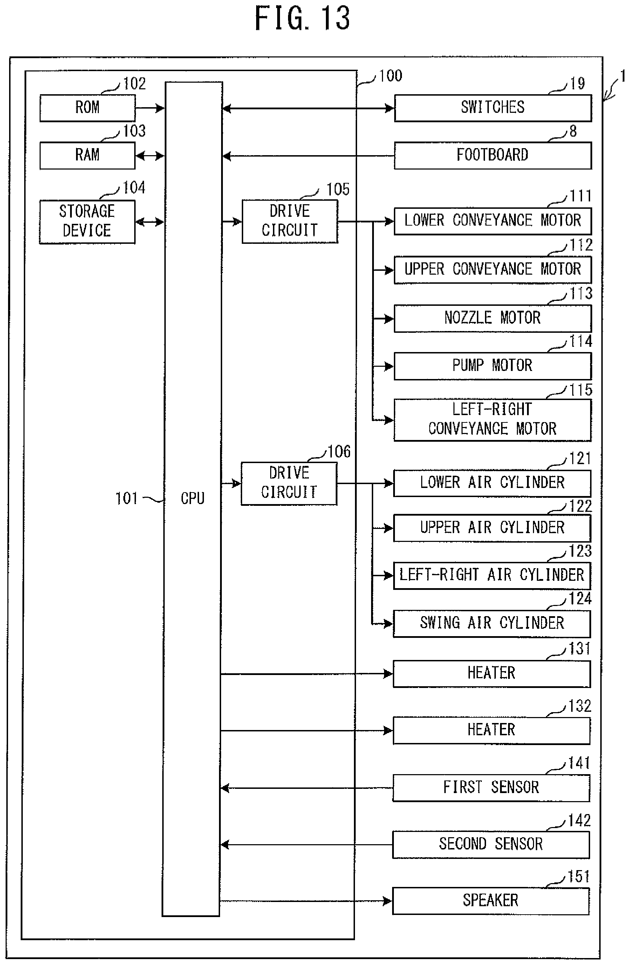

As shown in FIG. 2 and FIG. 3, the lower roller drive mechanism 15 is provided with a lower conveyance motor 111, a first pulley, a timing belt and a second pulley. The lower conveyance motor 111 is fixed to the holding portion 35, on the right side of the lower feed arm 7. The first pulley is fixed to an output shaft of the lower conveyance motor 111. The second pulley is fixed to the right end portion of the lower rotating shaft 211, inside the lower feed arm 7. The timing belt is stretched between the first pulley and the second pulley. The power of the lower conveyance motor 111 is transmitted to the lower roller 18 via the first pulley, the timing belt, the second pulley and the lower rotating shaft 211. Therefore, the lower roller drive mechanism 15 rotates the lower roller 18 using the power of the lower conveyance motor 111. The head portion 5 (refer to FIG. 1) supports a support arm 16, an upper air cylinder 122 (refer to FIG. 13) and an upper roller drive mechanism 21. The support arm 16 has an L-shaped box shape, in a left side view, that extends downward from the rear end portion of the head portion 5 and then protrudes to the front. The support arm 16 supports a shaft portion 5B at the front end portion of the support arm 16. The shaft portion 5B extends in the left-right direction. The shaft portion 5B rotatably supports an upper feed arm 6. The upper feed arm 6 has a box shape that extends in the front-rear direction, and the front side of the upper feed arm 6 extends in a downwardly inclined manner. The rear end portion of the upper feed arm 6 is provided inside the lower end portion of the support arm 16, and is located to the rear of the shaft portion 5B. The upper feed arm 6 supports an upper rotating shaft 72 at the front end portion of the upper feed arm 6. The upper rotating shaft 72 extends in the left-right direction, and protrudes to the left from the upper feed arm 6. The upper rotating shaft 72 supports the upper roller 12 at the left end portion of the upper rotating shaft 72. The upper air cylinder 122 is provided inside the support arm 16, in a posture along the up-down direction. A movable portion of the upper air cylinder 122 extends in the up-down direction. The movable portion of the upper air cylinder 122 is coupled to the rear end portion of the upper feed arm 6. The upper feed arm 6 swings around the shaft portion 5B due to the driving of the upper air cylinder 122. In accordance with the swinging of the upper feed arm 6, the upper roller 12 approaches or moves away from the lower roller 18. The upper roller drive mechanism 21 is provided with an upper conveyance motor 112, a first pulley 21A, a first timing belt 21B, a second pulley, a second timing belt and a third pulley. The upper conveyance motor 112 is fixed to a rear-side upper left portion of the head portion 5. The first pulley 21A is fixed to an output shaft 112A of the upper conveyance motor 112. The second pulley is provided inside the upper feed arm 6. The first timing belt 21B is stretched between the first pulley 21 A and the second pulley. The third pulley is fixed to the right end portion of the upper rotating shaft 72 inside the upper feed arm 6. The second timing belt is stretched between the second pulley and the third pulley. The power of the upper conveyance motor 112 is transmitted to the upper roller 12, via the first pulley 21A, the first timing belt 21B, the second pulley, the second timing belt, the third pulley and the upper rotating shaft 72. Therefore, the upper roller drive mechanism 21 rotates the upper roller 12 using the power of the upper conveyance motor 112. The lower roller 18 faces the upper roller 12 in the up-down direction. The lower roller 18 and the upper roller 12 clamp the lower cloth C1 and the upper cloth C2 (refer to FIG. 7), which are vertically overlaid with each other, in the up-down direction. Hereinafter, the position in which the lower roller 18 and the upper roller 12 clamp the lower cloth C1 and the upper cloth C2 is referred to as a clamping position P (refer to FIG. 7), and the upper roller 12 and the lower roller 18 are collectively referred to as a conveyance mechanism 14. The conveyance mechanism 14 conveys the lower cloth C1 and the upper cloth C2 while pressure-bonding them, via the adhesive, such that the lower cloth C1 and the upper cloth C2 are overlaid with each other in the up-down direction. Hereinafter, the direction in which the conveyance mechanism 14 conveys the lower cloth C1 and the upper cloth C2 is referred to as a conveyance direction (refer to an arrow M in FIG. 7). The conveyance direction intersects the up-down direction, and is directed from the front side to the rear of the upper roller 12 and the lower roller 18.

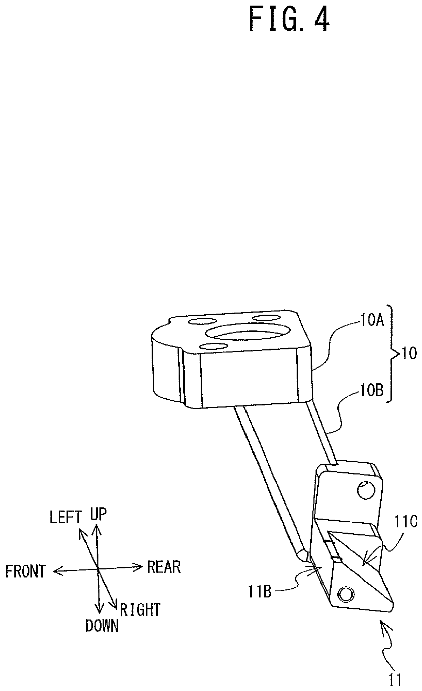

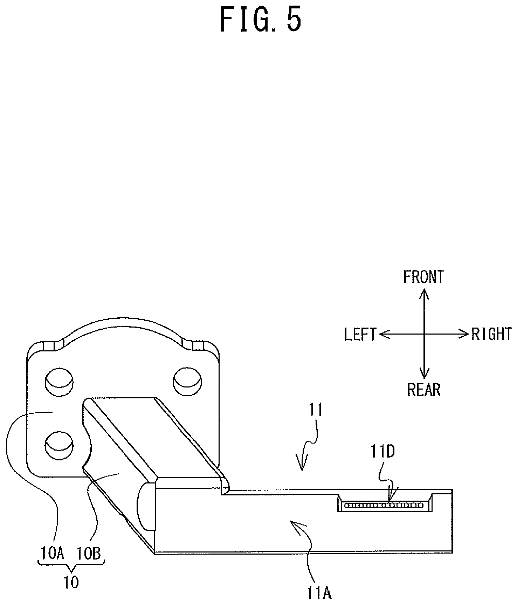

The head portion 5 is provided with a nozzle lever 9, a cover 29 and a nozzle lever swing mechanism 22. The nozzle lever 9 extends downward from the left side of the interior of the head portion 5. A nozzle support portion 10 is detachably mounted on the lower end portion of the nozzle lever 9. As shown in FIG. 4 and FIG. 5, the nozzle support portion 10 is provided with a first section 10A and a second section 10B. The first section 10A has a substantially prismatic shape, and the upper surface of the first section 10A is fixed to the nozzle lever 9. The second section 10B is substantially rod shaped, and extends downward from the lower surface of the first section 10A. The second section 10B supports the nozzle 11 at the lower end portion of the second section 10B. The nozzle 11 is substantially rod shaped, and extends to the right from the lower end portion of the second section 10B. A cross-sectional shape of the nozzle 11 in a direction orthogonal to the extending direction of the nozzle 11 is a triangular shape. The nozzle 11 is disposed on an upstream side of the conveyance mechanism 14 in the conveyance direction, and between the lower cloth C1 and the upper cloth C2 in the up-down direction. The nozzle 11 is provided with a first surface 11A, a second surface 11B and an inclined surface 11C. The first surface 11 A is directed downward, and extends in the conveyance direction and the left-right direction. The second surface 11B is directed forward, and extends upward from the front end portion of the first surface 11A. The inclined surface 11C is provided above the first surface 11A and to the rear of the second surface 11B, and is inclined downward from the front toward the rear. The inclined surface 11C connects the rear end portion of the first surface 11A and the upper end portion of the second surface 11B. The first surface 11A has discharge ports 11D. The discharge ports 11D are a plurality of through holes that are aligned in the left-right direction, and are provided to the front of a central portion of the nozzle 11 in the front-rear direction. In the present embodiment, the discharge ports 11D are provided in the vicinity of the front end portion of the first surface 11 A and to the right of a central portion of the first surface 11A in the left-right direction. The nozzle 11 discharges the adhesive downward from the discharge ports 11D onto the lower cloth C1.

As shown in FIG. 2 and FIG. 3, the cover 29 has a box shape that covers the nozzle lever 9, and is fixed to the nozzle lever 9. The nozzle lever swing mechanism 22 is provided with a nozzle motor 113 and a speed reduction mechanism 23. The nozzle motor 113 is a pulse motor and is provided on the left side in the interior of the head portion 5. An output shaft of the nozzle motor 113 extends forward from the nozzle motor 113. The speed reduction mechanism 23 is provided with a worm gear, a support shaft 26 and a worm wheel 25. The worm gear is fixed to the output shaft of the nozzle motor 113. The worm gear can rotate integrally with the output shaft of the nozzle motor 113, around an axis line extending in the conveyance direction. The support shaft 26 has a cylindrical shape, and extends in the left-right direction above the worm gear. The left end portion of the support shaft 26 is coupled to the upper end portion of the nozzle lever 9. The left end of the support shaft 26 is blocked and the right end of the support shaft 26 is open. The worm wheel 25 is provided to the right of the nozzle lever 9. The worm wheel 25 is fixed to the support shaft 26, and meshes with the upper end portion of the worm gear. Since the worm gear rotates due to the driving of the nozzle motor 13, the worm wheel 25 rotates integrally with the support shaft 26. The speed reduction mechanism 23 transmits the power of the nozzle motor 113 to the nozzle lever 9 at a predetermined speed reduction ratio (1:50 in the present embodiment). The nozzle lever 9 swings around the support shaft 26 due to the driving of the nozzle motor 113. In accordance with the swinging of the nozzle lever 9, the nozzle 11 moves in a direction of approaching or separating from the conveyance mechanism 14, in front of the conveyance mechanism 14. The nozzle lever 9 supports the nozzle 11 such that the nozzle 11 can move between a proximity position and a retracted position. When the nozzle 11 is in the proximity position, the discharge ports 11D face an outer peripheral surface of the lower roller 18 with a gap between the discharge ports 11D and the outer peripheral surface of the lower roller 18. When the nozzle 11 is in the retracted position, the nozzle 11 is separated from the conveyance mechanism 14 forward and upward in comparison to when the nozzle 11 is in the proximity position.

The head portion 5 is provided with a mounting portion 41 and a supply mechanism 45. The mounting portion 41 is provided on a substantially central portion of the head portion 5, and is provided with a cover 41A (refer to FIG. 1), a housing portion 41B, a lid 41C and a heater 131 (refer to FIG. 13). The cover 41A has a substantially cuboid box shape, and extends upward from the upper surface of the head portion 5. The cover 41A opens in the up-down direction. The housing portion 41B is provided inside the cover 41A. The housing portion 41B has a substantially cuboid box shape, and extends from the interior of the head portion 5 to the upper end of the cover 41A. The housing portion 41B is open upward. A cartridge is detachably housed in the housing portion 41B. The lid 41C is detachably provided on the upper side of the housing portion 41B, and opens and closes the upper opening of the housing portion 41B. The cartridge houses a hot-melt adhesive. The adhesive is liquefied when the adhesive is heated to a predetermined temperature, and solidifies at a temperature lower than the predetermined temperature. The heater 131 is provided in the housing portion 41B, and heats the cartridge housed in the housing portion 41B. The adhesive is melted and liquefied when heated by the heater 131. The supply mechanism 45 is provided with a pump motor 114 and a gear pump 46. The pump motor 114 is provided inside the arm portion 4 (refer to FIG. 1). An output shaft 114A of the pump motor 114 extends to the left from the pump motor 114. The gear pump 46 is provided on the front side of the mounting portion 41, and is connected to the right end portion of the support shaft 26. The output shaft 114A is coupled to the gear pump 46 via a gear 46A. The gear pump 46 sucks the adhesive from the cartridge housed in the housing portion 41 B, and supplies the sucked adhesive to the nozzle 11.

Flow paths of the adhesive will be explained. The adhesive flows through the each of the flow paths provided inside the gear pump 46, inside the support shaft 26, inside the nozzle lever 9, inside the nozzle support portion 10 and inside the nozzle 11, and reaches the discharge ports 11D (refer to FIG. 5). The nozzle lever 9 is provided with a heater 132 (refer to FIG. 13) in the vicinity of the flow path provided inside the nozzle lever 9. The heat of the heater 132 is transmitted to the nozzle 11 via the nozzle support portion 10. The heater 132 heats the adhesive that flows through the inside of the nozzle lever 9 toward the discharge ports 11D. By driving of the pump motor 114, the gear pump 46 sucks the adhesive from the cartridge housed in the housing portion 41B. While the heaters 131 and 132 are heating the adhesive, the adhesive flows from the cartridge through each of the flow paths, and is discharged downward from the discharge ports 11D.

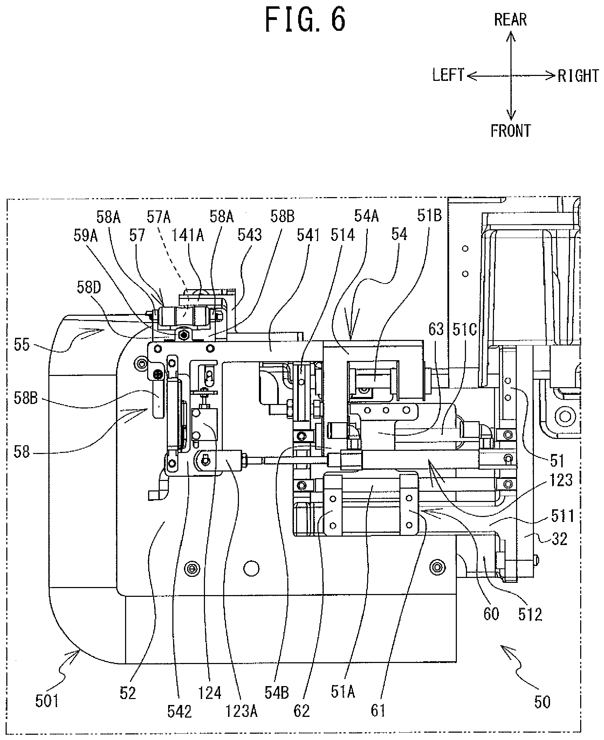

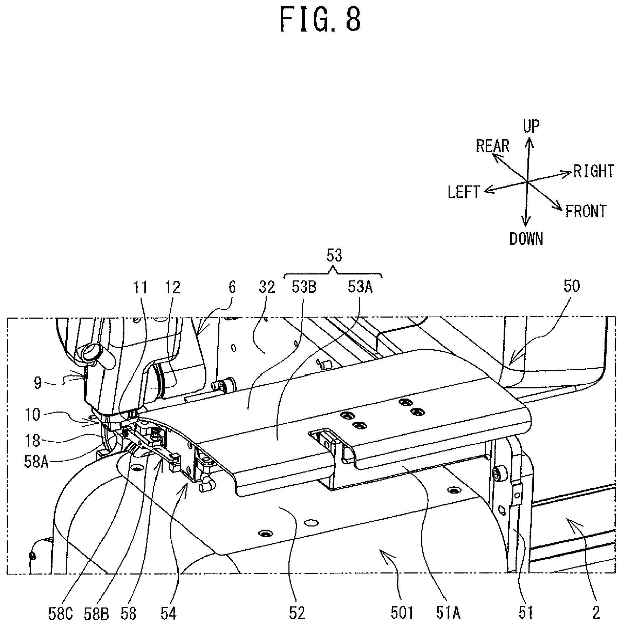

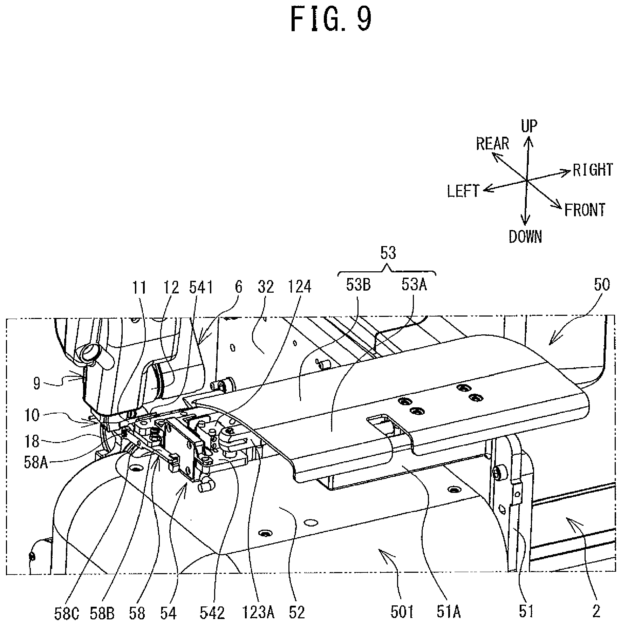

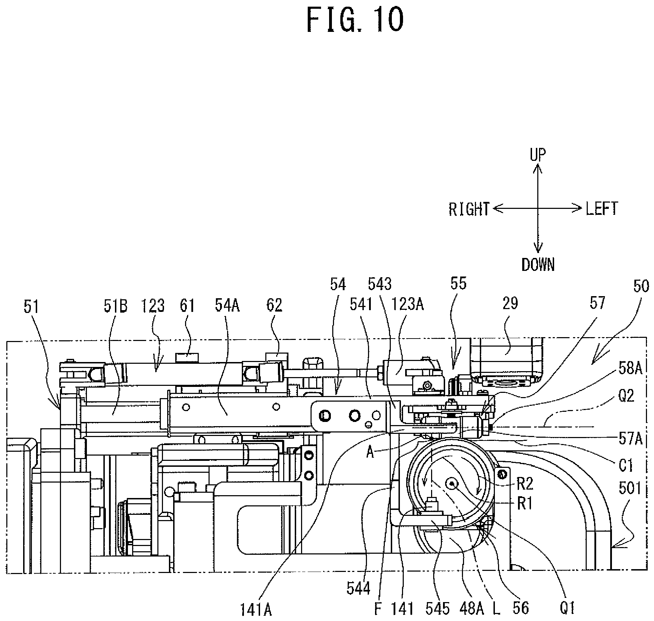

The conveyance control unit 50 will be explained with reference to FIG. 1, FIG. 2 and FIG. 6 to FIG. 12. FIG. 10 omits illustration of the lower roller 18, the nozzle support portion 10, the nozzle 11, a first support portion 52A to be described later, and the like. The conveyance control unit 50 controls the position in the left-right direction of the right end portion (hereinafter referred to as a specified end portion F) of the lower cloth C1 (refer to FIG. 10). The conveyance control unit 50 is detachably mounted on the bonding device 1. As shown in FIG. 6 and FIG. 7, the conveyance control unit 50 is provided with a base portion 51, a cover 501, a second support portion 53, a holding portion 54, a movement mechanism 55 and a left-right air cylinder 123. The base portion 51 has a rectangular plate shape in a left side view, and is fixed to the front end portion of the left surface of the fixing portion 32 using screws. The front end portion of the base portion 51 is positioned on the front side of the base portion 2. An operator attaches or detaches the conveyance control unit 50 to or from the bonding device 1, by fixing or removing the base portion 51 to or from the fixing portion 32. The base portion 51 supports receiving portions 511 and 512. The receiving portion 511 is substantially rod shaped and is open upward. The receiving portion 511 extends to the left from an upper portion of the front end portion of the base portion 51. The receiving portion 511 has a support portion 514 at the left end portion of the receiving portion 511. The support portion 514 is substantially rod shaped, and extends rearward from the left end portion of the receiving portion 511. As shown in FIG. 7, the receiving portion 512 has a plate shape in a plan view, and extends to the left from a lower portion of the base portion 51. The receiving portion 512 supports a receiving portion 513. The receiving portion 513 has a plate shape in a front view, and extends upward from the front end portion of the receiving portion 512. As shown in FIG. 1, the cover 501 has a box shape that is open downward, rearward and rightward, and an upper wall portion of the cover 501 is fixed to the upper end of the receiving portion 513 (refer to FIG. 7). The upper surface of the cover 501 is a first support portion 52. The first support portion 52 extends parallel to the horizontal plane, and is provided on the front side of a first roller 56 (refer to FIG. 7) and a second roller 57 to be described later. The first support portion 52 is positioned below the nozzle 11 (refer to FIG. 2). The first support portion 52 supports the lower cloth C1 from below, and guides the lower cloth C1 to a space between the first roller 56 and the second roller 57. As shown in FIG. 2, the upper end surface of a front wall portion of the holding portion 33 is the first support portion 52A. The first support portion 52A extends parallel to the horizontal plane, and is provided on the upstream side of the conveyance mechanism 14 in the conveyance direction and on a downstream side of the first roller 56 and the second roller 57 in the conveyance direction. The first support portion 52A is positioned below the nozzle 11. The first support portion 52A supports the lower cloth C1 from below, and guides the lower cloth C1 to a space between the upper roller 12 and the lower roller 18. As shown in FIG. 6, the base portion 51 supports a first guide member 51A, a second guide member 51B and a third guide member 51C, on the rear side of the receiving portion 511. The first guide member 51A, the second guide member 51B and the third guide member 51C have a cylindrical shape, and each extends in the left-right direction between the left surface of the base portion 51 and the support portion 514. The first guide member 51A, the third guide member 51C and the second guide member 51B are arranged in that order from the front to the rear such that the first guide member 51 A, the third guide member 51C and the second guide member 51B are parallel to each other. The first guide member 51A is positioned above the second guide member 51B and the third guide member 51C. As shown in FIG. 7, the second support portion 53 is provided on the front side of the conveyance mechanism 14 and above the nozzle 11 (refer to FIG. 8). That is, the first support portion 52 is positioned below the second support portion 53. The second support portion 53 covers the holding portion 54 and the like from above. The second support portion 53 supports the upper cloth C2 from below, and guides the upper cloth C2 to the space between the upper roller 12 and the lower roller 18. A front half section (hereinafter referred to as a first section 53A) of the second supports portion 53 extends substantially parallel to the horizontal plane. A rear half section (hereinafter referred to as a second section 53B) of the second support portion 53 extends from the rear end of the first section 53A such that the rear half section of the second support portion 53 is inclined downward and rearward. The rear end portion of the second section 53B is positioned on the upper side of the rear end portion of the nozzle 11. The rear end portion of the second section 53B extends along the inclined surface 11C (refer to FIG. 4). A first coupling portion 61 and a second coupling portion 62 of a coupling portion 60 are coupled to the lower surface of the first section 53A. The first guide member 51 A and the third guide member 51C support the coupling portion 60 such that the coupling portion 60 can move in the left-right direction. The coupling portion 60 is provided with the first coupling portion 61, the second coupling portion 62 and an extending portion 63. The first coupling portion 61 and the second coupling portion 62 extend in the front-rear direction, and extend downward from the rear end portion. The first guide member 51A supports the first coupling portion 61 and the second coupling portion 62 such that the first coupling portion 61 and the second coupling portion 62 can move in the left-right direction. The second coupling portion 62 is arranged to the left of the first coupling portion 61 and in parallel to the first coupling portion 61. The extending portion 63 is coupled to the first coupling portion 61 and the second coupling portion 62. The extending portion 63 extends rearward from the rear end portion of the first coupling portion 61 and the lower end portion of the second coupling portion 62, passes through the third guide member 51C, and extends to the vicinity of the second guide member 51B. The third guide member 51C supports the extending portion 63 such that the extending portion 63 can move in the left-right direction. In accordance with the movement of the coupling portion 60 in the left-right direction, the second support portion 53 can move in the left-right direction between a first position (refer to FIG. 8) and a second position (refer to FIG. 9). When the coupling portion 60 has moved to the leftmost side, the second support portion 53 is in the first position. When the coupling portion 60 has moved to the rightmost side, the second support portion 53 is in the second position. As shown in FIG. 8, when the second support portion 53 is in the first position, the left rear end portion of the second section 53B is aligned with the nozzle 11 on the upstream side in the conveyance direction. In other words, in the first position, the second support portion 53 is located on a movement path of the nozzle 11. As shown in FIG. 9, when the second support portion 53 is in the second position, the second support portion 53 is displaced to the right from the position at which the second support portion 53 is aligned with the nozzle 11 on the upstream side in the conveyance direction. In other words, when the second support portion 53 is in the second position, the second support portion 53 is positioned to the right of the right end portion of the nozzle 11, and is retracted to a position off the movement path of the nozzle 11. The holding portion 54 is provided on the upper side of the first support portion 52 and on the lower side of the second support portion 53, and holds a first sensor 141 to be described later, and the second roller 57 and the like. As shown in FIG. 6 and FIG. 7, the holding portion 54 is provided with a support portion 54A, an engagement portion 54B, a first section 541, a second section 542, a third section 543, a fourth section 544 and a fifth section 545. As shown in FIG. 6, the support portion 54A has a substantially U shape that is open forward in a plan view. The second guide member 51B supports the support portion 54A such that the support portion 54A can move in the left-right direction. The engagement portion 54B extends forward from the left front end portion of the support portion 54A. The third guide member 51C supports the engagement portion 54B such that the engagement portion 54B can move in the left-right direction. The engagement portion 54B can come into contact with the extending portion 63 from the left side and can engage with the extending portion 63. The first section 541 extends to the left from the left rear end portion of the support portion 54A. The second section 542 has a rectangular shape in a plan view, and extends forward from the left side of the front end portion of the first section 541. As shown in FIG. 6 and FIG. 7, the third section 543 has a substantially L shape in a plan view. The third section 543 extends in the left-right direction on the rear surface of the first section 541, and the left end portion of the third section 543 bends rearward and extends. The third section 543 is fixed to the rear surface of the first section 541. The fourth section 544 extends downward from the rear end portion of the third section 543. The fifth section 545 extends to the left from the lower end portion of the fourth section 544. The holding portion 54 holds the first sensor 141 at the leading end of the fifth section 545. The first sensor 141 is positioned to the front of the discharge ports 11D (refer to FIG. 5), and on the rear side of the first roller 56 and the second roller 57 to be described later. The first sensor 141 is in a position that is below the clamping position P and that is displaced to the right from the center of the first roller 56 (refer to FIG. 10). The first sensor 141 is a reflection type photo sensor in which a light emitting portion and a light receiving portion are integrated with each other. The holding portion 54 supports a reflection plate 141A at the rear end portion of the third section 543. The reflection plate 141A extends to the left from the rear end portion of the third section 543, as far as above the first sensor 141 (refer to FIG. 6). The lower surface of the reflection plate 141A is a reflection surface, and is orthogonal to the up-down direction. The light emitting portion of the first sensor 141 emits light upward toward the reflection plate 141A. The reflection plate 141A reflects the light emitted by the light emitting portion of the first sensor 141 toward the light receiving portion of the first sensor 141. The light receiving portion of the first sensor 141 receives the reflected light from the reflection plate 141A. A traveling path L of the light extends linearly between the first sensor 141 and the reflection plate 141A. When the lower cloth C1 is located on the traveling path L of the light emitted by the light emitting portion of the first sensor 141, the lower cloth C1 interrupts the light emitted by the light emitting portion of the first sensor 141. The reflection plate 141A cannot reflect the light, and the light receiving portion of the first sensor 141 does not receive the light emitted by the light emitting portion of the first sensor 141. The first sensor 141 detects whether or not the lower cloth C1 is at a predetermined detection position A, on the basis of whether or not the light receiving portion receives the light emitted by the light emitting portion. The detection position A is an intersection point between the traveling path L of the light emitted by the light emitting portion of the first sensor 141 and the conveyance path of the lower cloth C1, and is located on the upstream side of the discharge ports 11D in the conveyance direction and on the downstream side of the first roller 56 and the second roller 57 (to be described later) in the conveyance direction. The detection position A is positioned between the center of the first roller 56 and the right end portion of the first roller 56 in a rear view (refer to FIG. 10).

The movement mechanism 55 moves the lower cloth C1 in the left-right direction on the upstream side of the detection position A in the conveyance direction. The movement mechanism 55 is provided with a left-right conveyance motor 115, the first roller 56, the second roller 57 and a roller swing mechanism 58. The left-right conveyance motor 115 is fixed to a bracket (not shown in the drawings) that extends upward from the upper surface of the receiving portion 512. An output shaft 115A of the left-right conveyance motor 115 extends rearward from the left-right conveyance motor 115. By driving of the left-right conveyance motor 115, the output shaft 115A rotates in the clockwise direction (hereinafter referred to as a first output direction) and the counterclockwise direction (hereinafter referred to as a second output direction) in a rear view. A support rod 115B has a cylindrical shape and is provided above the output shaft 115A. The support rod 115B extends in the front-rear direction above and to the rear of the left-right conveyance motor 115. The support rod 115B is supported by the bracket. A first gear 48A is fixed to the output shaft 115A. The support rod 115B rotatably supports a second gear 48B at the front end portion of the support rod 115B. The second gear 48B meshes with the upper end portion of the first gear 48A. The first roller 56 has a disk shape, in a rear view, that has a predetermined width in the front-rear direction, and is provided in front of the detection position A. The first roller 56 is provided with a rotating shaft 56A. The rotating shaft 56A has a tubular shape having a through hole that penetrates in the front-rear direction, and protrudes forward from the center of the first roller 56. The support rod 115B is inserted through the through hole of the rotating shaft 56A. The support rod 115B rotatably supports the rotating shaft 56A at the rear end portion of the support rod 115B. The front end portion of the rotating shaft 56A is coupled to the second gear 48B. More specifically, the output shaft 115A is coupled to the first roller 56 via the first gear 48A and the second gear 48B. In the bonding device 1, since the first gear 48A and the second gear 48B are interposed, the output shaft 115A can be disposed below the rotating shaft 56A. Thus, the bonding device 1 can house the left-right conveyance motor 115 below the first support portion 52.

As shown in FIG. 10, an axis line (hereinafter referred to as a first axis line Q1) that passes through the center of the first roller 56 extends in parallel to the conveyance direction (in the front-rear direction). The first roller 56 can rotate reciprocally around the first axis line Q1 in the counterclockwise direction (hereinafter referred to as a first rotation direction R1) and the clockwise direction (hereinafter referred to as a second rotation direction R2) in a rear view. When the output shaft 115A rotates in the first output direction (refer to FIG. 7) due to the driving of the left-right conveyance motor 115, the first roller 56 rotates in the second rotation direction R2 via the first gear 48A and the second gear 48B. When the output shaft 115A rotates in the second output direction due to the driving of the left-right conveyance motor 115, the first roller 56 rotates in the first rotation direction R1 via the first gear 48A and the second gear 48B. As shown in FIG. 7, the first roller 56 has a plurality of grooves 56B that are arranged at equal intervals along the circumferential direction of an outer peripheral surface of the first roller 56. The plurality of grooves 56B each extend in parallel to the conveyance direction (in parallel to the first axis line Q1). The second roller 57 faces the first roller 56 from above. The second roller 57 is made of resin, for example, and has an outer peripheral surface that is a smooth surface. The second roller 57 includes a facing portion 57A. The facing portion 57A is formed such that, in the left-right direction, at least a part of the outer peripheral surface of the second roller 57 is recessed inwardly in a radial direction (a direction orthogonal to a rotational axis of the second roller 57) along the shape of the first roller 56. More specifically, the facing portion 57A has a circular arc shape centered on the first axis line Q1 in a rear view. In a state in which the lower cloth C1 is arranged between the second roller 57 and the first roller 56, the facing portion 57A of the second roller 57 can come into contact with the upper surface of the cloth C1. An axis line (hereinafter referred to as a second axis line Q2) that passes through the center of the second roller 57 extends in a direction orthogonal to the first axis line Q1 (in the left-right direction). The second roller 57 can rotate in the clockwise direction in a right side view around the second axis line Q2. The second roller 57 comes into contact with the upper surface of the lower cloth C1, and thus inhibits the lower cloth C1 from floating up from the first roller 56. At the same time, the second roller 57 is driven to rotate in accordance with the conveyance of the lower cloth C1, and thus assists the conveyance of the lower cloth C1.

As shown in FIG. 6 and FIG. 7, the roller swing mechanism 58 is provided with a support shaft portion 58A, a pair of support arms 58B, a pair of swing shaft portions 58C, an urging member 59 and a swing air cylinder 124. The support shaft portion 58A extends in the left-right direction, and rotatably supports the second roller 57. The pair of support arms 58B extend in parallel to the conveyance direction, and are separated from each other in the left-right direction. Respective rear end portions of the pair of support arms 58B support both end portions of the support shaft portion 58A. The rear end portions of the pair of support arms 58B are provided on the upper side of the first roller 56. The pair of support arms 58B are coupled by a coupling arm 58D in the vicinities of the respective rear end portions. The coupling arm 58D extends in the left-right direction between the pair of support arms 58B, in front of the second roller 57.

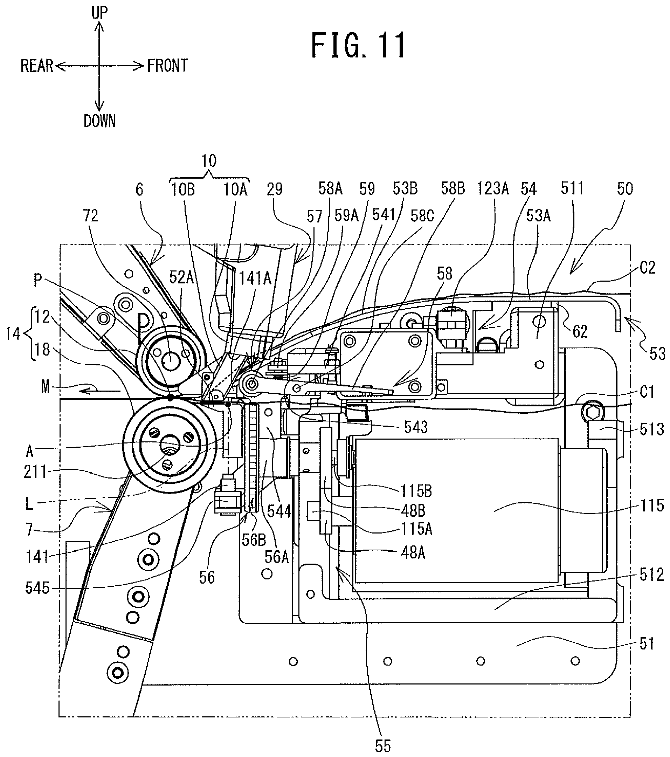

As shown in FIG. 7 and FIG. 11, the pair of swing shaft portions 58C extend in parallel to the support shaft portion 58A, and are provided on the upstream side of the support shaft portion 58A in the conveyance direction. The pair of swing shaft portions 58C swingably support central portions of the pair of support arms 58B. The pair of support arms 58B swing around the swing shaft portions 58C. In accordance with the swinging of the pair of support arms 58B, the facing portion 57A of the second roller 57 can be displaced in a direction of approaching or separating from the first roller 56. The urging member 59 is provided on the upper side of the support arms 58B, and in a position of the coupling arm 58D in the front-rear direction. The urging member 59 of the present embodiment is a compression coil spring. One end of the urging member 59 is fixed to the lower surface of a fixing portion 59A. The fixing portion 59A is provided on the rear surface of the first section 541, and protrudes rearward from the rear end portion of the first section 541, at an intermediate position of the pair of support arms 58B in the left-right direction. The other end of the urging member 59 engages with the coupling arm 58D. The urging member 59 urges the second roller 57 downward via the pair of support arms 58B. By urging the second roller 57, the urging member 59 inhibits the lower cloth C1 from floating up from the first roller 56.

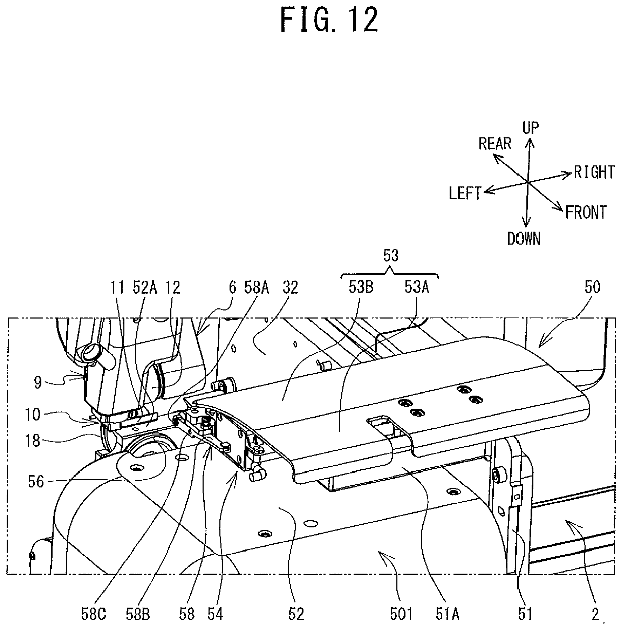

As shown in FIG. 6, the swing air cylinder 124 is provided on the upper surface of the second section 542. A movable portion of the swing air cylinder 124 is coupled to the support arms 58B. The support arms 58B swing substantially in the up-down direction in accordance with the driving of the swing air cylinder 124. The second roller 57 can be displaced between a third position (refer to FIG. 7) and a fourth position (refer to FIG. 11) in accordance with the swinging of the support arms 58B. As shown in FIG. 7, when the second roller 57 is in the third position, the facing portion 57A faces the first roller 56 from above, and comes into contact with the upper surface of the lower cloth C1 along the outer peripheral surface of the first roller 56. As shown in FIG. 11, when the second roller 57 is in the fourth position, the facing portion 57A is separated upward from the first roller 56 in comparison to when the second roller 57 is in the third position. At that time, the lower end of the second roller 57 is positioned above the upper end of the first roller 56. The left-right air cylinder 123 is provided between the first guide member 51A and the third guide member 51C in the front-rear direction, and is fixed to the upper end of the base portion 51. The left-right air cylinder 123 is positioned on the upper side of the extending portion 63. The leading end portion of the movable portion 123A of the left-right air cylinder 123 is coupled to the upper surface of the second section 542. In accordance with the driving of the left-right air cylinder 123, the movable portion 123A moves in the left-right direction. In accordance with the driving of the left-right air cylinder 123, the holding portion 54 can move between the first position (refer to FIG. 8 and FIG. 9) and the second position (refer to FIG. 12). As shown in FIG. 8 and FIG. 9, when the holding portion 54 is in the first position, the second roller 57 is aligned with the nozzle 11 on the upstream side in the conveyance direction. In other words, in the first position, the second roller 57 is located on the movement path of the nozzle 11. As shown in FIG. 12, when the holding portion 54 is in the second position, the second roller 57 is displaced to the right from the position at which the second roller 57 is aligned with the nozzle 11 on the upstream side in the conveyance direction. In other words, when the holding portion 54 is in the second position, the second roller 57 is positioned to the right of the right end portion of the nozzle 11, and is retracted to the position off the movement path of the nozzle 11. The second support portion 53 can move in the left-right direction with respect to the holding portion 54. When the holding portion 54 moves from the first position (refer to FIG. 8) to the second position (refer to FIG. 12), the engagement portion 54B (refer to FIG. 6) comes into contact and engages with the extending portion 63 (refer to FIG. 6) from the left side. As a result of the engagement portion 54B engaging with the extending portion 63 from the left side, the engagement portion 54B moves the second support portion 53 from the first position to the second position. When the holding portion 54 moves from the second position (refer to FIG. 12) to the first position (refer to FIG. 9), the engagement portion 54B separates from the extending portion 63 in the leftward direction, thus releasing the engagement with the extending portion 63. Thus, the second support portion 53 is maintained in the second position (refer to FIG. 9).

An electrical configuration of the bonding device 1 will be explained with reference to FIG. 13. The bonding device 1 is provided with a control device 100. The control device 100 is provided with a CPU 101, a ROM 102, a RAM 103, a storage device 104, and drive circuits 105 and 106. The CPU 101 performs integrated control of operations of the bonding device 1. The CPU 101 is connected to the ROM 102, the RAM 103, the storage device 104, the drive circuits 105 and 106, switches 19, a footboard 8, the heaters 131 and 132, the first sensor 141, a second sensor 142 and a speaker 151. The ROM 102 stores programs to execute various types of processing. The RAM 103 temporarily stores various types of information. The storage device 104 is nonvolatile and stores various setting values. On the basis of a command from the CPU 101, the drive circuit 105 controls and drives the lower conveyance motor 111, the upper conveyance motor 112, the nozzle motor 113, the pump motor 114 and the left-right conveyance motor 115. On the basis of a command from the CPU 101, the drive circuit 106 controls and drives the lower air cylinder 121, the upper air cylinder 122, the left-right air cylinder 123 and the swing air cylinder 124. The switches 19 are provided on a lower portion of the front surface of the head portion 5. The switches 19 are used to input, to the CPU 101, various commands corresponding to operations by the operator. The footboard 8 is provided on a lower portion of the work bench and is operated by a foot of the operator. In accordance with the operation by the operator, the footboard 8 instructs the CPU 101 to start or end the bonding operation. The CPU 101 controls the temperature of the heaters 131 and 132. When the first sensor 141 receives light, the first sensor 141 outputs an ON signal to the CPU 101. When the first sensor 141 does not receive light, the first sensor 141 outputs an OFF signal to the CPU 101. The second sensor 142 is a proximity sensor, and detects the position of the holding portion 54 in the left-right direction. When the holding portion 54 is in the first position, the second sensor 142 outputs an ON signal to the CPU 101. When the holding portion 54 is not in the first position, the second sensor 142 outputs an OFF signal to the CPU 101. The speaker 151 outputs various sounds.

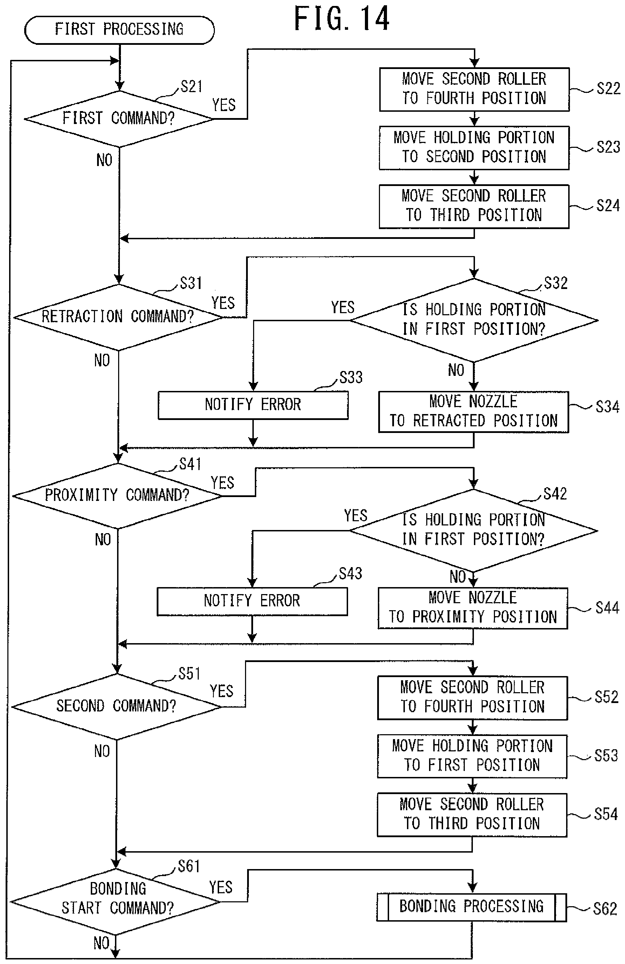

First processing will be explained with reference to FIG. 14. The operator turns on the power source of the bonding device 1 and activates the bonding device 1. The CPU 101 reads the program from the ROM 102 and performs the first processing. The CPU 101 determines whether or not a command (hereinafter referred to as a first command) to drive the left-right air cylinder 123 and move the holding portion 54 to the second position (refer to FIG. 12) has been acquired (step S21). The first command is input by the operator operating the switches 19. When the first command has not been acquired (no at step S21), the CPU 101 advances the processing to step S31. When the first command has been acquired (yes at step S21), the CPU 101 controls the swing air cylinder 124 and moves the second roller 57 to the fourth position (refer to FIG. 11) (step S22). Even when the holding portion 54 moves between the first position (refer to FIG. 8) and the second position (refer to FIG. 12), the second roller 57 does not interfere with the first roller 56. By controlling the left-right air cylinder 123, the CPU 101 moves the holding portion 54 to the second position (step S23). When the holding portion 54 moves from the first position to the second position, the engagement portion 54B engages with the extending portion 63, and thus the second support portion 53 also moves to the second position. Thus, even when the nozzle 11 moves between the proximity position (refer to FIG. 2) and the retracted position (refer to FIG. 3), the nozzle 11 does not interfere with the holding portion 54 and the second support portion 53. By controlling the swing air cylinder 124, the CPU 101 moves the second roller 57 to the third position (refer to FIG. 7) (step S24). The CPU 101 advances the processing to step S31. The CPU 101 determines whether or not a command (hereinafter referred to as a retraction command) to drive the nozzle motor 113 and move the nozzle 11 to the retracted position (refer to FIG. 3) has been acquired (step S31). The retraction command is input by the operator operating the switches 19. When the retraction command has not been acquired (no at step S31), the CPU 101 advances the processing to step S41. When the retraction command has been acquired (yes at step S31), the CPU 101 determines whether or not the holding portion 54 is in the first position (refer to FIG. 8), on the basis of the signal from the second sensor 142 (step S32). When the ON signal is received from the second sensor 142, the CPU 101 determines that the holding portion 54 is in the first position (yes at step S32). If the nozzle 11 moves between the proximity position and the retracted position when the holding portion 54 is in the first position, there is a possibility that the nozzle 11 may interfere with the second roller 57 or the second support portion 53. The CPU 101 prohibits the nozzle lever 9 from swinging due to the driving of the nozzle motor 113, and performs error notification (step S33). As the error notification, the CPU 101 outputs a warning sound from the speaker 151. The CPU 101 may display a warning on a display portion. The CPU 101 advances the processing to step S41. After operating the switches 19 and moving the holding portion 54 to the second position, the operator operates the switches 19 once again and inputs the retraction command to the bonding device 1. When the OFF signal is received from the second sensor 142, the CPU 101 determines that the holding portion 54 is not in the first position (no at step S32). When the holding portion 54 is not in the first position, the second support portion 53 is also not in the first position (refer to FIG. 12). Even when the nozzle 11 moves between the proximity position and the retracted position when the holding portion 54 and the second support portion 53 are not in the first position, the nozzle 11 does not interfere with the second roller 57 and the second support portion 53. By controlling the nozzle motor 113, the CPU 101 swings the nozzle lever 9 and moves the nozzle 11 to the retracted position (step S34). The CPU 101 advances the processing to step S41. When the nozzle 11 is in the retracted position, the operator performs cleaning of the nozzle 11 and the like (refer to FIG. 3). The CPU 101 determines whether or not a command (hereinafter referred to as a proximity command) to drive the nozzle motor 113 and move the nozzle 11 to the proximity position (refer to FIG. 2) has been acquired (step S41). The proximity command is input by the operator operating the switches 19. When the proximity command has not been acquired (no at step S41), the CPU 101 advances the processing to step S51. When the proximity command has been acquired (yes at step S41), the CPU 101 determines whether or not the holding portion 54 is in the first position, on the basis of the signal from the second sensor 142 (step S42). When the ON signal is received from the second sensor 142, the CPU 101 determines that the holding portion 54 is in the first position (yes at S42). The CPU 101 prohibits the nozzle lever 9 from swinging due to the driving of the nozzle motor 113, and performs the error notification (step S43). The CPU 101 advances the processing to step S51. After operating the switches 19 and moving the holding portion 54 to the second position, the operator operates the switches 19 once again and inputs the proximity command to the bonding device 1. When the OFF signal is received from the second sensor 142, the CPU 101 determines that the holding portion 54 is not in the first position (no at step S42). By controlling the nozzle motor 113, the CPU 101 swings the nozzle lever 9 and moves the nozzle 11 to the proximity position (step S44). The CPU 101 advances the processing to step S51. The CPU 101 determines whether or not a command (hereinafter referred to as a second command) to drive the left-right air cylinder 123 and move the holding portion 54 to the first position (refer to FIG. 9) has been acquired (step S51). The second command is input by the operator operating the switches 19. When the second command has not been acquired (no at step S51), the CPU 101 advances the processing to step S61. When the second command has been acquired (yes at step S51), the CPU 101 controls the swing air cylinder 124 and moves the second roller 57 to the fourth position (step S52). By controlling the left-right air cylinder 123, the CPU 101 moves the holding portion 54 to the first position (step S53). When the holding portion 54 moves from the second position to the first position, the engagement portion 54B releases the engagement with the extending portion 63. Thus, the second support portion 53 is maintained in the second position (refer to FIG. 9). By controlling the swing air cylinder 124, the CPU 101 moves the second roller 57 to the third position (step S54). The CPU 101 advances the processing to step S61. As shown in FIG. 9, in a state in which the second support portion 53 is not located above the left side of the first support portion 52, the operator arranges the lower cloth C1 on the first support portion 52 between the first roller 56 and the second roller 57. The operator arranges the downstream side end portion of the lower cloth C1 in the conveyance direction between the upper roller 12 and the lower roller 18. The operator manually moves the second support portion 53 from the second position to the first position. The operator arranges the upper cloth C2 on the second support portion 53. The operator places the downstream side end portion of the upper cloth C2 in the conveyance direction on top of the lower cloth C1, between the upper roller 12 and the lower roller 18. As shown in FIG. 14, the CPU 101 determines whether or not a command (hereinafter referred to as a bonding start command) to start the bonding operation has been acquired (step S61). The bonding start command is input by the operator operating the footboard 8. When the bonding start command has not been acquired (no at step S61), the CPU 101 returns the processing to step S21. When the bonding start command has been acquired (yes at step S61), the CPU 101 performs the bonding processing (step S62).

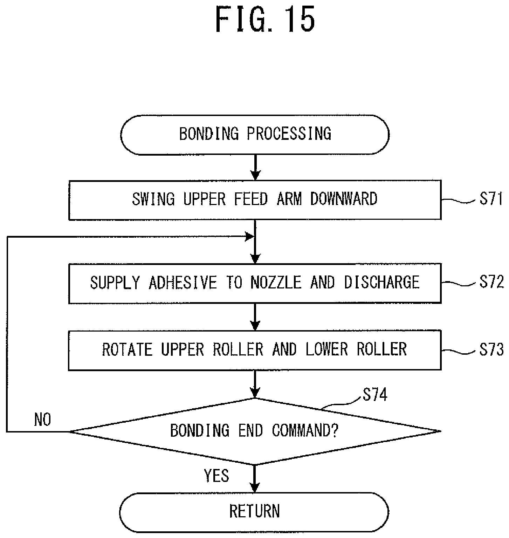

The bonding processing will be explained with reference to FIG. 15. In the bonding processing, the CPU 101 controls the lower conveyance motor 111, the upper conveyance motor 112 and the pump motor 114, and causes the adhesive to be discharged from the discharge ports 11D. While the discharge ports 11D are applying the adhesive onto the specified end portion F of the lower cloth C1, the bonding device 1 pressure-bonds and conveys the lower cloth C1 and the upper cloth C2 by driving of the lower conveyance motor 111 and the upper conveyance motor 112. By controlling the upper air cylinder 122, the CPU 101 swings the upper feed arm 6 downward (step S71). In accordance with the downward swing of the upper feed arm 6, the upper cloth C2 and the lower cloth C1 are clamped between the upper roller 12 and the lower roller 18 such that the upper cloth C2 is overlaid on the upper side of the lower cloth C1. By controlling the pump motor 114, the CPU 101 cause the pump motor 114 to supply the adhesive to the nozzle 11 from the cartridge housed in the housing portion 41B, and discharge the adhesive onto the lower cloth C1 from the discharge ports 11D (step S72). By controlling the lower conveyance motor 111 and the upper conveyance motor 112, the CPU 101 cause the upper roller 12 and the lower roller 18 to rotate (step S73). By causing the upper roller 12 and the lower roller 18 to rotate, the lower cloth C1 and the upper cloth C2 are conveyed in the conveyance direction while pressure-bonding the lower cloth C1 and the upper cloth C2 via the adhesive, such that the lower cloth C1 and the upper cloth C2 are overlaid in the up-down direction. As a result of the lower cloth C1 moving in the conveyance direction, the second roller 57 is also driven to rotate. The CPU 101 determines whether or not a command (hereinafter referred to as a bonding end command) to end the bonding operation has been acquired (step S74). The bonding end command is input by the operator operating the footboard 8. When the bonding end command has not been acquired (no at step S74), the CPU 101 returns the processing to step S72, and performs the bonding operation (step S72, step S73). When the bonding end command has been acquired (yes at step S74), the CPU 101 ends the bonding operation, and returns the processing to step S21 of the first processing (refer to FIG. 14).

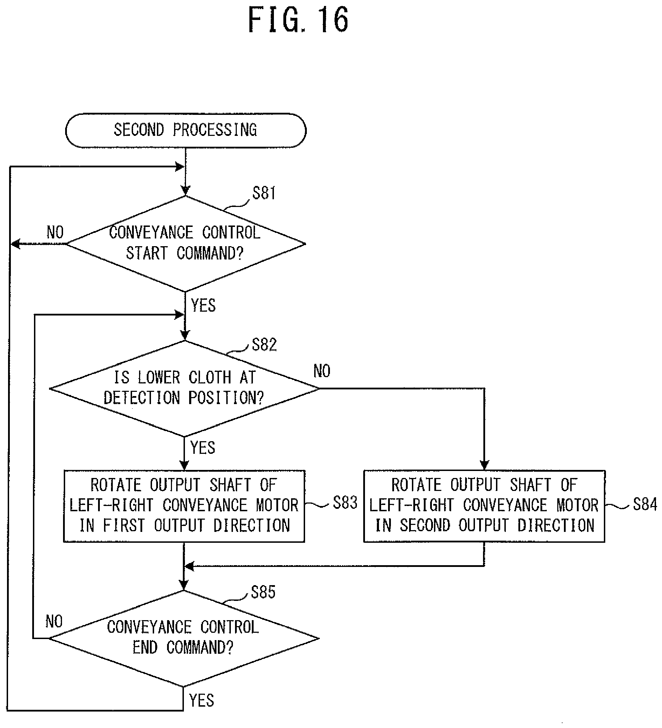

Second processing will be explained with reference to FIG. 16. The operator turns on the power source of the bonding device 1 and activates the bonding device 1. The CPU 101 reads the program from the ROM 102 and performs the second processing. The CPU 101 performs the second processing in parallel with the first processing (refer to FIG. 14). The CPU 101 determines whether or not a command (hereinafter referred to as a conveyance control start command) to start the control of the movement mechanism 55 has been acquired (step S81). The conveyance control start command is input by the operator operating the switches 19. When the conveyance control start command has not been acquired (no at step S81), the CPU 101 repeats the processing at step S81. For example, before inputting the bonding start command, the operator inputs the conveyance control start command. When the conveyance control start command has been acquired (yes at step S81), the CPU 101 determines whether or not the lower cloth C1 is at the detection position A, on the basis of the signal from the first sensor 141 (step S82). When the OFF signal is received from the first sensor 141, the CPU 101 determines that the lower cloth C1 is at the detection position A (yes at step S82). By controlling the left-right conveyance motor 115, the CPU 101 cause the output shaft 115A to rotate in the first output direction (step S83). In accordance with the rotation of the output shaft 115A in the first output direction, the first roller 56 rotates in the second rotation direction R2. As a result of the first roller 56 rotating in the second rotation direction R2, the lower cloth C1 clamped between the first roller 56 and the facing portion 57A moves to the left. The CPU 101 advances the processing to step S85. When the ON signal is received from the first sensor 141, the CPU 101 determines that the lower cloth C1 is not at the detection position A (no at step S82). By controlling the left-right conveyance motor 115, the CPU 101 causes the output shaft 115A to rotate in the second output direction (step S84). In accordance with the rotation of the output shaft 115A in the second output direction, the first roller 56 rotates in the first rotation direction R1. As a result of the first roller 56 rotating in the first rotation direction R1, the lower cloth C1 clamped between the first roller 56 and the facing portion 57A moves to the right. The CPU 101 advances the processing to step S85. The CPU 101 determines whether or not a command (hereinafter referred to as a conveyance control end command) to end the control of the movement mechanism 55 has been acquired (step S85). The conveyance control end command is input by the operator operating the switches 19. When the conveyance control end command has not been acquired (no at step S85), the CPU 101 returns the processing to step S82, and repeats the processing from step S82 to step S84 for a predetermined period. For example, after inputting the bonding end command, the operator inputs the conveyance control end command. When the conveyance control end command has been acquired (yes at step S85), the CPU 101 stops the driving of the left-right conveyance motor 115, and returns the processing to step S81.

As explained above, when the lower cloth C1 is at the detection position A, the specified end portion F moves in the direction (the leftward direction) in which the lower cloth C1 located at the detection position A deviates from the detection position A. When the lower cloth C1 is not at the detection position A, the specified end portion F moves in the direction (the rightward direction) in which the lower cloth C1 located at a position deviated from the detection position A moves toward the detection position A. By repeating the processing from step S82 to step S84, the bonding device 1 repeatedly moves the lower cloth C1 in one of the direction in which the lower cloth C1 deviates from the detection position A and the direction in which the lower cloth C1 moves toward the detection position A. Thus, the bonding device 1 can control the position of the specified end portion F in the left-right direction. Since the bonding device 1 performs the first processing and the second processing in parallel with each other, the bonding device 1 can discharge the adhesive from the discharge ports 11D while controlling the position of the specified end portion F in the left-right direction. More specifically, the bonding device 1 can apply the adhesive onto the specified end portion F by discharging the adhesive from the discharge ports 11D onto the specified end portion F of the lower cloth C1 whose position in the left-right direction is controlled. Thus, the bonding device 1 can stabilize the application accuracy of the adhesive onto the specified end portion F of the lower cloth C1.

In the bonding device 1, the lower cloth C1 is arranged between the first roller 56 and the second roller 57. By rotating the first roller 56 in the second rotation direction R2, the bonding device 1 can move the lower cloth C1 to the left. By rotating the first roller 56 in the first rotation direction R1, the bonding device 1 can move the lower cloth C1 to the right. Since the second roller 57 is in contact with the upper surface of the lower cloth C1, the lower cloth C1 does not float up and can follow the rotation of the first roller 56. The bonding device 1 can control the position of the specified end portion F in the left-right direction by simply rotating the first roller 56 in one place. Therefore, it is not necessary to secure a large space to provide the movement mechanism 55 in the bonding device 1, and it is possible to suppress an increase in the size of the movement mechanism 55.

Since the grooves 56B extend in parallel to the first axis line Q1, when the first roller 56 rotates, friction caused by the grooves 56B is likely to occur between the first roller 56 and the lower cloth C1. Therefore, the bonding device 1 can reliably move the lower cloth C1 in the left-right direction. Since the grooves 56B extend in parallel to the conveyance direction, when the conveyance mechanism 14 conveys the lower cloth C1, the friction caused by the grooves 56B is unlikely to occur between the first roller 56 and the lower cloth C1. Therefore, the bonding device 1 can inhibit the first roller 56 from obstructing the conveyance of the lower cloth C1 by the conveyance mechanism 14. Thus, the bonding device 1 can reliably convey the lower cloth C1 while reliably controlling the position of the specified end portion F in the left-right direction.

In the left-right direction, the outer peripheral surface of the facing portion 57A is recessed inwardly in the radial direction along the outer shape of the first roller 56. Since the second roller 57 is provided with the facing portion 57A, it is possible to enlarge the area over which the lower cloth C1 is in contact with the first roller 56 and the second roller 57 in a state in which the lower cloth C1 is arranged between the second roller 57 and the first roller 56. Therefore, in the bonding device 1, the lower cloth C1 does not float up and can follow the rotation of the first roller 56.

When the swing shaft portions 58C swing the support arms 58B, the second roller 57 is displaced in the up-down direction. More specifically, the second roller 57 can move in the direction in which the facing portion 57A approaches or separates from the first roller 56. When the lower cloth C1 is arranged between the second roller 57 and the first roller 56, the second roller 57 can be displaced in accordance with the thickness of the lower cloth C1. Therefore, the bonding device 1 can reliably control the position of the specified end portion F in the left-right direction, regardless of the thickness of the lower cloth C1.

When the second support portion 53 and the holding portion 54 move to the second position, the nozzle lever 9 can move the nozzle 11 in the direction of separating from the conveyance mechanism 14. When the nozzle 11 is in the retracted position, the operator performs the cleaning of the nozzle 11, for example. The operator can easily clean the nozzle 11, by the bonding device 1 moving the nozzle 11 in the direction of separating from the conveyance mechanism 14, from the position in which members of the conveyance mechanism 14 and the like are disposed.

When the bonding device 1 moves the nozzle 11, it is necessary to move the holding portion 54 and the second support portion 53 to the second position. When the holding portion 54 moves from the first position to the second position, since the engagement portion 54B engages with the extending portion 63 from the left side, the second support portion 53 moves from the first position to the second position. Therefore, the bonding device 1 can also move the second support portion 53 to the second position simply by moving the holding portion 54 to the second position. It is thus possible to improve working efficiency. When the operator arranges the lower cloth C1 on the first support portion 52 between the first roller 56 and the second roller 57, if the second support portion 53 is in the first position, it is difficult to arrange the lower cloth C1. When the holding portion 54 moves from the second position to the first position, the second support portion 53 is maintained in the second position. Therefore, since the second support portion 53 does not obstruct the space between the first roller 56 and the second roller 57, the operator can easily arrange the lower cloth C1 between the first roller 56 and the second roller 57.

When the first command or the second command is received, the bonding device 1 moves the second roller 57 to the fourth position before moving the holding portion 54 to the first position or the second position. Thus, the bonding device 1 can inhibit the second roller 57 from coming into contact with the first roller 56. When the holding portion 54 moves from the first position to the second position, the engagement portion 54B engages with the extending portion 63 from the left side. As a result, the second support portion 53 moves from the first position to the second position. Therefore, the bonding device 1 moves the holding portion 54 and the second support portion 53 to the second position, simply by receiving the first command or the second command. It is thus possible to improve the working efficiency. When the second command is received, the bonding device 1 moves the holding portion 54 from the second position to the first position. When the holding portion 54 moves from the second position to the first position, the second support portion 53 is maintained in the second position. Therefore, since the second support portion 53 does not obstruct the space between the first roller 56 and the second roller 57, the operator can easily arrange the first sheet C1 between the first roller 56 and the second roller 57.

By the driving of the nozzle motor 113, the bonding device 1 moves the nozzle lever 9 in the direction of approaching or separating from the conveyance mechanism 14. When the proximity command or a separation command is received, the bonding device 1 prohibits the movement of the nozzle 11 when the holding portion 54 is in the first position. Thus, the bonding device 1 can inhibit the nozzle 11 from interfering with the holding portion 54 and the like.

The discharge ports 11D are located on the upstream side in the conveyance direction relative to the central portion of the nozzle 11 in the conveyance direction. In comparison to when the discharge ports 11D are located on the downstream side in the conveyance direction relative to the central portion of the nozzle 11 in the conveyance direction, the distance between the discharge ports 11D and the detection position A is short. Therefore, for example, when the specified end portion F curves, the bonding device 1 can improve the application accuracy of the adhesive onto the specified end portion F, by controlling the position of the specified end portion F in the left-right direction immediately in front of the discharge ports 11D.

The greater the volume of the nozzle 11, the larger the heat capacity, and thus the temperature of the adhesive can easily be maintained to be constant. The nozzle 11 can secure the heat capacity corresponding to an amount by which the second surface 11 B extends upward from the upstream side end portion of the first surface 11A in the conveyance direction. The second support portion 53 is provided on the upper side of the nozzle 11. The second section 53B is inclined downward from the upstream side toward the downstream side in the conveyance direction. Since the inclined surface 11C is inclined downward from the upstream side toward the downstream side in the conveyance direction, the nozzle 11 can secure a space to dispose the second section 53B. Therefore, since the nozzle 11 includes the first surface 11A, the second surface 11B and the inclined surface 11C, the bonding device 1 can secure the space to dispose the second support portion 53 while securing the heat capacity of the nozzle 11.

The lower cloth C1 of the above-described embodiment corresponds to a first sheet of the present invention. The upper cloth C2 corresponds to a second sheet. The left-right direction of the bonding device 1 corresponds to a specified direction. The rightward direction of the bonding device 1 corresponds to one side in the specified direction. The leftward direction of the bonding device 1 corresponds to the other side in the specified direction. The CPU 101 that performs the processing at step S72 and step S73 in FIG. 15 corresponds to a discharge-conveyance control portion. The downward direction of the bonding device 1 corresponds to a discharge direction. The upward direction of the bonding device 1 corresponds to an opposite direction. The first sensor 141 corresponds to a first detection portion. The CPU 101 that performs the processing at step S83 and step S84 corresponds to a movement control portion. The CPU 101 that performs the processing at step S83 corresponds to a first movement control portion. The CPU 101 that performs the processing at step S84 corresponds to a second movement control portion, The left-right conveyance motor 115 corresponds to a first drive portion. The nozzle lever 9 and the nozzle support portion 10 correspond to a nozzle support mechanism. The left-right air cylinder 123 corresponds to a second drive portion. The swing air cylinder 124 corresponds to a third drive portion. The CPU 101 that performs the processing at steps S22, S23, S52 and S53 in FIG. 14 corresponds to a drive control portion. The first command and the second command correspond to a drive command to the second drive portion. The nozzle motor 113 corresponds to a nozzle drive portion. The second sensor 142 corresponds to a second detection portion. The retraction command and the proximity command correspond to a drive command to the nozzle drive portion. The CPU 101 that performs the processing at step S32 and step S42 in FIG. 14 corresponds to a movement prohibition portion.

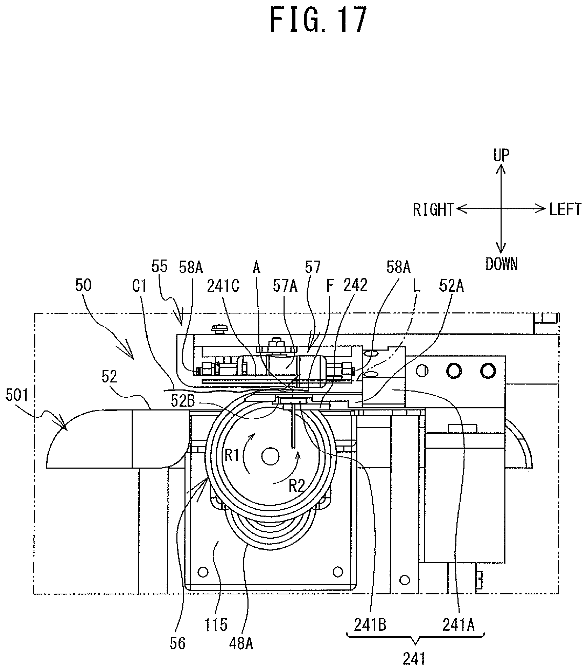

The present invention can be modified in various ways from the above-described embodiment. For example, the bonding device 1 may be provided with a transmission type photo sensor, a CCD camera or the like, in place of the first sensor 141 that is a reflection type photo sensor. Hereinafter, with reference to FIG. 17, a case will be explained in which the bonding device 1 is provided with a transmission type photo sensor (hereinafter referred to as a first sensor 241) in place of the first sensor 141. Members having the same functions as those of the above-described embodiment are assigned with the same reference numbers, and explanations of the members are omitted here. The first sensor 241 is provided with a light emitting portion 241A and a light receiving portion 241B. The light emitting portion 241A is provided to the left of the first roller 56 and the second roller 57. The light emitting portion 241A is positioned to the front of the discharge ports 11D and to the rear of the first roller 56 and the second roller 57. The light emitting portion 241A emits light rightward from a position above the upper end portion of the first roller 56. The light receiving portion 241B is provided on the right side of the first support portion 52A and between the center of the first roller 56 and the left end portion of the first roller 56. The light receiving portion 241B is positioned to the front of the discharge ports 11D and to the rear of the first roller 56 and the second roller 57. The first support portion 52A is provided with a light receiving window 52B in a position corresponding to the light receiving portion 241B. The light receiving window 52B is an opening that penetrates the first support portion 52A in the up-down direction. The bonding device 1 is provided with a reflection plate 241C in place of the reflection plate 141 A. The left end portion of the reflection plate 241C is a reflection surface, and the upper side of the reflection plate 241C extends in a direction inclined leftward. The refection surface is arranged between the center of the first roller 56 and the left end portion of the first roller 56.

The light emitting portion 241A emits light toward the reflection plate 241C. The reflection plate 241C downwardly reflects the light emitted by the light emitting portion 241 A toward the light receiving portion 241B. The light receiving portion 241B receives the reflected light from the reflection plate 241C via the light receiving window 52B. The traveling path L of the light extends from the light emitting portion 241A to the reflection plate 241C, and then bends downward and extends to the light receiving portion 241B. The traveling path L forms an L shape. When the lower cloth C1 is located on the traveling path L of the light emitted by the light emitting portion 241A, the lower cloth C1 interrupts the light emitted by the light emitting portion 241A. The light receiving portion 241B does not receive the light emitted by the light emitting portion 241A. The first sensor 241 detects whether or not the lower cloth C1 is at the detection position A, on the basis of whether or not the light receiving portion 241B receives the light emitted by the light emitting portion 241A. The detection position A is positioned between the center of the first roller 56 and the left end portion of the first roller 56 in the left-right direction.

In the modified example, the specified end portion F is the left end portion of the lower cloth C1. The first rotation direction R1 is the clockwise direction in a rear view. The second rotation direction R2 is the counterclockwise direction in a rear view. The first output direction is the counterclockwise direction in a rear view. The second output direction is the clockwise direction in a rear view. That is, when the lower cloth C1 is at the detection position A, the specified end portion F moves in the direction (the rightward direction) in which the lower cloth C1 located at the detection position A deviates from the detection position A. When the lower cloth C1 is not at the detection position A, the specified end portion F moves in the direction (the leftward direction) in which the lower cloth C1 located at a position deviated from the detection position A moves toward the detection position A.

The first sensor 141 may be provided to the rear of the discharge ports 11D or to the front of the first roller 56 and the second roller 57. In this case, the traveling path L of the light may be adjusted so that the light emitted by the light emitting portion of the first sensor 141 reaches the detection position A located to the front of the discharge ports 11D.

The second sensor 142 may detect whether or not the holding portion 54 is in the second position. At step S32 and step S42, when, on the basis of the signal from the second sensor 142, it is detected that the holding portion 54 is not in the second position, the CPU 101 may perform the processing at step S33 and step S43. When the holding portion 54 is in the second position, the CPU 101 may perform the processing at step S34 and step S44. The second sensor 142 is not limited to the proximity sensor, and may be an optical sensor, for example.

When the lower cloth C1 is not stretchable, the second roller 57 need not necessarily have the facing portion 57A. More specifically, the second roller 57 may have a cylindrical shape. In place of the second roller 57, the bonding device 1 may be provided with an elastic member, for example. The elastic member comes into contact with the upper surface of the lower cloth C1, and inhibits the lower cloth C1 from floating up from the first roller 56, regardless of the thickness of the lower cloth C1. Since the elastic member elastically deforms in accordance with the thickness of the lower cloth C1, the bonding device 1 need not necessarily be provided with the roller swing mechanism 58.

The cross-sectional shape of the nozzle 11 that is orthogonal to the left-right direction may be, for example, a circular shape or a polygonal shape. Although the nozzle 11 discharges the adhesive from the discharge ports 11D onto the lower cloth C1, the nozzle 11 may discharge the adhesive onto the upper cloth C2. In this case, the movement mechanism 55 may move the upper cloth C2 in the left-right direction. More specifically, the bonding device 1 may arrange the upper cloth C2 between the first roller 56 and the second roller 57. In this case, the upward direction of the bonding device 1 corresponds to the discharge direction of the present invention.

The holding portion 54 need not necessarily be provided with the engagement portion 54B. The operator may manually move the second support portion 53 to the first position and the second position. The operator may manually move the holding portion 54 to the first position and the second position.

It is sufficient that at least one of the plurality of grooves 56B of the first roller 56 is provided in a part of the outer peripheral surface of the first roller 56. The grooves 56B need not necessarily be parallel to the conveyance direction. The conveyance mechanism 14 is not limited to the upper roller 12 and the lower roller 18, and may be a belt, for example. The object to be bonded is not limited to cloth, and may be a long tape, for example. The nozzle lever 9 may support the nozzle 11 such that the nozzle 11 can move in the left-right direction or the front-rear direction.

## Claims

1. A bonding device (1) including a conveyance mechanism (14) adapted to convey a first sheet (C1) and a second sheet (C2) along a conveyance direction intersecting an up-down direction while pressure-bonding, via an adhesive, the first sheet and the second sheet that are overlaid in the up-down direction, a nozzle (11) including a discharge port adapted to discharge the adhesive onto the first sheet and disposed on an upstream side of the conveyance mechanism in the conveyance direction and between the first sheet and the second sheet in the up-down direction, a supply mechanism (45) adapted to supply the adhesive to the nozzle, and a discharge-conveyance control portion (101) adapted to control the conveyance mechanism and the supply mechanism so as to pressure-bond and convey the first sheet and the second sheet while applying the adhesive onto a specified end portion of the first sheet on one side in a specified direction orthogonal to the conveyance direction and the up-down direction, the bonding device comprising:
a first detection portion (141) adapted to detect whether the first sheet is at a predetermined detection position located on the upstream side of the discharge port in the conveyance direction;
a movement mechanism (55) adapted to move the first sheet in the specified direction on the upstream side of the detection position in the conveyance direction; and
a movement control portion adapted to control the movement mechanism when the discharge-conveyance control portion controls the conveyance mechanism and the supply mechanism, the movement control portion including a first movement control portion and a second movement control portion, the first movement control portion controlling the movement mechanism and moving the first sheet to the one side in the specified direction when the first detection portion detects that the first sheet is not at the detection position, the second control portion controlling the movement mechanism and moving the first sheet to another side in the specified direction when the first detection portion detects that the first sheet is at the detection position.

2. The bonding device according to claim 1, wherein
the movement mechanism includes:
a first roller (56) adapted to rotate reciprocally around a first axis line extending in parallel to the conveyance direction in a first rotation direction and a second rotation direction, the first rotation direction being a direction to move the first sheet to the one side in the specified direction, the second rotation direction being the direction to move the first sheet to the other side in the specified direction;
a first drive portion (115) coupled to the first roller; and
a second roller (57) adapted to face the first roller from above and rotate around a second axis line parallel to the specified direction,
the second roller is adapted to come into contact with the first sheet in a state in which the first sheet is arranged between the second roller and the first roller,
the first movement control portion controls the first drive portion and rotates the first roller in the first rotation direction when the first detection portion detects that the first sheet is not at the detection position, and
the second movement control portion controls the first drive portion and rotates the first roller in the second rotation direction when the first detection portion detects that the first sheet is at the detection position.

3. The bonding device according to claim 2, wherein
the first roller includes an outer peripheral surface provided with a groove extending in parallel to the conveyance direction.

4. The bonding device according to either one of claims 2 and 3, wherein
an outer peripheral surface of the second roller includes a facing portion (57A) that is recessed inwardly in a radial direction along an outer shape of the first roller in the specified direction.

5. The bonding device according to any one of claims 2 to 4, wherein
the movement mechanism includes:
a support shaft portion (58A) adapted to support the second roller such that the second roller is capable of rotating around the second axis line;
a support arm (58B) extending in parallel to the conveyance direction and adapted to support the support shaft portion; and
a swing shaft portion (58C) extending in parallel to the support shaft portion, provided on one of the upstream side and a downstream side with respect to the support shaft portion in the conveyance direction, and adapted to swingably support the support arm.

6. The bonding device according to any one of claims 2 to 5, further comprising:
a first support portion (52, 52A) located on the upstream side of the conveyance mechanism in the conveyance direction and on an adhesive discharge direction side in relation to the nozzle, and adapted to support the first sheet from below;
a second support portion (53) located on the upstream side of the conveyance mechanism in the conveyance direction and on an opposite direction side from the discharge direction in relation to the nozzle, and adapted to support the second sheet from below;
a nozzle support mechanism (9, 10) adapted to support the nozzle on the upstream side of the conveyance mechanism in the conveyance direction such that the nozzle is movable in one of a direction approaching and a direction separating from the conveyance mechanism; and
a holding portion (54) adapted to hold the first detection portion and the second roller,
wherein
the second support portion and the holding portion are movable between a first position and a second position, the first position being a position in which the second support portion and the second roller are aligned with the nozzle on the upstream side in the conveyance direction, the second position being a position in which the second support portion and the second roller are displaced to the one side in the specified direction from the position in which the second support portion and the second roller are aligned with the nozzle on the upstream side in the conveyance direction, and
the nozzle support mechanism is adapted to move the nozzle when the second support portion and the holding portion are located in the second position.

7. The bonding device according to claim 6, wherein
the first support portion is positioned below the second support portion,
the holding portion includes an engagement portion capable of engaging with the second support portion with respect to the other side in the specified direction,
the second support portion is movable in the specified direction with respect to the holding portion,
the engagement portion engages with the second support portion and moves the second support portion to the second position when the holding portion moves from the first position to the second position, and
the engagement portion releases the engagement with the second support portion and the second support portion is maintained in the second position when the holding portion moves from the second position to the first position.

8. The bonding device according to claim 5, further comprising:
a first support portion (52, 52A) located on the upstream side of the conveyance mechanism in the conveyance direction and on an adhesive discharge direction side in relation to the nozzle, and adapted to support the first sheet from below;
a second support portion (53) located on the upstream side of the conveyance mechanism in the conveyance direction and on an opposite direction side from the discharge direction in relation to the nozzle, and adapted to support the second sheet from below;
a nozzle support mechanism (9, 10) adapted to support the nozzle on the upstream side of the conveyance mechanism in the conveyance direction such that the nozzle is movable in one of a direction approaching and a direction separating from the conveyance mechanism;
a holding portion (54) adapted to hold the first detection portion and the second roller;
a second drive portion (123) adapted to move the holding portion to a first position and a second position, the first position being a position in which the second support portion and the second roller are aligned with the nozzle on the upstream side in the conveyance direction, and the second position being a position in which the second support portion and the second roller are displaced to the one side in the specified direction from the position in which the second support portion and the second roller are aligned with the nozzle on the upstream side in the conveyance direction;
a third drive portion (124) adapted to move the second roller to a third position and a fourth position, the third position being a position in which the second roller faces the first roller from above in accordance with swinging of the support arm, and the fourth position being a position in which the second roller is further separated from the first roller than in the third position; and
a drive control portion configured to control the third drive portion and the second drive portion,
wherein
the first support portion is positioned below the second support portion,
the second support portion and the holding portion are movable between the first position and the second position, ,
the nozzle support mechanism is capable of moving the nozzle when the second support portion and the holding portion are located in the second position,
the holding portion includes an engagement portion capable of engaging with the second support portion from the other side in the specified direction,
the second support portion is movable in the specified direction with respect to the holding portion,
the engagement portion engages with the second support portion and moves the second support portion to the second position when the holding portion moves from the first position to the second position,
the engagement portion releases the engagement with the second support portion and the second support portion is maintained in the second position when the holding portion moves from the second position to the first position,
the second roller is adapted to displace between the third position and the fourth position, and
when a drive command to the second drive portion is received, after controlling the third drive portion and moving the second roller to the fourth position, the drive control portion controls the second drive portion and moves the holding portion to one of the first position and the second position.

9. The bonding device according to any one of claims 6 to 8, further comprising:
a nozzle drive portion (113) adapted to drive the nozzle support mechanism and to move the nozzle in one of the direction approaching and the direction separating from the conveyance mechanism;
a second detection portion (142)adapted to detect a position of the holding portion in the specified direction; and
a movement prohibition portion adapted to prohibit the movement of the nozzle by the nozzle drive portion when the drive command to the nozzle drive portion is received and the position of the holding portion detected by the second detection portion is the first position.

10. The bonding device according to any one of claims 1 to 5, wherein
the discharge port is located on the upstream side in the conveyance direction in relation to a central portion of the nozzle in the conveyance direction.

11. The bonding device according to any one of claims 6 to 8, wherein
the discharge port is located on the upstream side in the conveyance direction in relation to a central portion of the nozzle in the conveyance direction.

12. The bonding device according to any one of claim 9, wherein
the discharge port is located on the upstream side in the conveyance direction in relation to a central portion of the nozzle in the conveyance direction.

13. The bonding device according to claim 10, further comprising:
a second support portion (53) located on the upstream side of the conveyance mechanism in the conveyance direction and on an opposite direction side from the discharge direction in relation to the nozzle, and adapted to support the second sheet from below,
wherein
the second support portion is disposed on the upper side of the nozzle, and has a shape extending in a direction inclined downward from the upstream side toward the downstream side in the conveyance direction, and
the nozzle includes:
a first surface (11A) including the discharge port and extending in the conveyance direction and the specified direction;
a second surface (11B) extending upward from an upstream side end portion of the first surface in the conveyance direction; and
an inclined surface (11C) provided on the opposite direction side from the first surface and on the downstream side of the second surface in the conveyance direction, and inclined downward from the upstream side toward the downstream side in the conveyance direction.

14. The bonding device according to claim 11, wherein
the second support portion is disposed on the upper side of the nozzle, and has a shape extending in a direction inclined downward from the upstream side toward the downstream side in the conveyance direction, and
the nozzle includes:
a first surface (11A) including the discharge port and extending in the conveyance direction and the specified direction;
a second surface (11B) extending upward from an upstream side end portion of the first surface in the conveyance direction; and
an inclined surface (11C) provided on the opposite direction side from the first surface and on the downstream side of the second surface in the conveyance direction, and inclined downward from the upstream side toward the downstream side in the conveyance direction.

15. The bonding device according to claim 12, further comprising:
a second support portion (53) located on the upstream side of the conveyance mechanism in the conveyance direction and on an opposite direction side from the discharge direction in relation to the nozzle, and adapted to support the second sheet from below,
wherein
the second support portion is disposed on the upper side of the nozzle, and has a shape extending in a direction inclined downward from the upstream side toward the downstream side in the conveyance direction, and
the nozzle includes:
a first surface (11A) including the discharge port and extending in the conveyance direction and the specified direction;
a second surface (11B) extending upward from an upstream side end portion of the first surface in the conveyance direction; and
an inclined surface (11C) provided on the opposite direction side from the first surface and on the downstream side of the second surface in the conveyance direction, and inclined downward from the upstream side toward the downstream side in the conveyance direction.

16. A conveyance control unit (50) of a first sheet adapted to be mounted on a bonding device which includes a conveyance mechanism (14) adapted to convey the first sheet and a second sheet along a conveyance direction intersecting an up-down direction while pressure-bonding, via an adhesive, the first sheet and the second sheet that are overlaid in the up-down direction, and a nozzle (11) including a discharge port adapted to discharge the adhesive onto the first sheet and being disposed on an upstream side of the conveyance mechanism in the conveyance direction and between the first sheet and the second sheet in the up-down direction, and which pressure-bonds and conveys the first sheet and the second sheet while applying the adhesive onto a specified end portion of the first sheet on one side in a specified direction orthogonal to the conveyance direction and the up-down direction, the conveyance control unit comprising:
a first support portion (52) located on the upstream side of the discharge port in the conveyance direction and on a discharge direction side, in which the discharge port discharges the adhesive, in relation to the nozzle, and adapted to support the first sheet from below;
a second support portion (53) located on the upstream side of the discharge port in the conveyance direction and on an opposite direction side from the discharge direction in relation to the nozzle, and adapted to support the second sheet from below;
a first detection portion (141) adapted to detect whether the first sheet is at a predetermined detection position located on the upstream side of the discharge port in the conveyance direction; and
a movement mechanism (55) adapted to move the first sheet in the specified direction on the upstream side of the detection position in the conveyance direction, the movement mechanism moving the first sheet to one side in the specified direction when the first detection portion detects that the first sheet is not at the detection position, and moving the first sheet to another side in the specified direction when the first detection portion detects that the first sheet is at the detection position.
